(19) **Europäisches Patentamt**

**European Patent Office**

**Office européen des brevets**

(11) **EP 1 473 954 B1**

(12) **FASCICULE DE BREVET EUROPEEN**

(45) Date de publication et mention
de la délivrance du brevet:
**02.11.2006 Bulletin 2006/44**

(51) Int Cl.:
*H04Q 7/34* *(2006.01)*

(21) Numéro de dépôt: **04291062.0**

(22) Date de dépôt: **23.04.2004**

(54) **Dispositif et procédé de contrôle de charge avec contrôle de puissance**

Vorrichtung und Verfahren zur LadungsKontrolle mit Hilfe vom Leistungsregelung

Device and method for charging control with power control

(84) Etats contractants désignés:
**AT BE BG CH CY CZ DE DK EE ES FI FR GB GR HU IE IT LI LU MC NL PL PT RO SE SI SK TR**

(30) Priorité: **30.04.2003 FR 0305354**

(43) Date de publication de la demande:
**03.11.2004 Bulletin 2004/45**

(73) Titulaires:
• **FRANCE TELECOM**
  **75015 Paris (FR)**
• **Inria Institut National de Recherche en Informatique et en Automatique**
  **78153 Le Chesnay Cedex (FR)**

(72) Inventeurs:
• **Baccelli, François**
  **92190 Meudon (FR)**
• **Blaszczyszyn, Bartlomiej**
  **92220 Bagneux (FR)**
• **Karray, Mohamed K.**
  **92130 Issy les Molineaux (FR)**

(74) Mandataire: **Plaçais, Jean Yves**
**Cabinet Netter,**
**36, avenue Hoche**
**75008 Paris (FR)**

(56) Documents cités:
**EP-A- 1 028 543       FR-A- 2 827 098**
**FR-A- 2 828 621       US-A1- 2002 098 847**

• **ZANDER J: "PERFORMANCE OF OPTIMUM TRANSMITTER POWER CONTROL IN CELLULAR RADIO SYSTEMS" IEEE TRANSACTIONS ON VEHICULAR TECHNOLOGY, IEEE INC. NEW YORK, US, vol. 41, no. 1, 1 février 1992 (1992-02-01), pages 57-62, XP000297041 ISSN: 0018-9545**
• **KNUTSSON J ET AL: "Downlink admission control strategies for CDMA systems in a Manhattan environment" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, 18 mai 1998 (1998-05-18), pages 1453-1457, XP010287985 ISBN: 0-7803-4320-4**

## Description

L'invention concerne les réseaux de communication sans fil.

Les réseaux de communication sans fil comprennent des stations de base en liaison avec des mobiles. Une station de base est adaptée, sur requête d'un mobile, pour établir une communication avec ce mobile. Cette communication permet un échange de paroles ou de données numériques entre utilisateurs. De tels réseaux de communication sont décrits par exemple dans les demandes de brevet FR 2 828 621 et EP 1 028 543.

Une telle communication peut être effectuée par "voie descendante", auquel cas la communication est établie de la station de base vers le mobile. L'expression "voie descendante" ou "sens descendant" vise le cas où une station de base cherche à établir ou maintenir une communication vers le mobile.

Dans un réseau de communication sans fil, les stations de base fournissent des services aux mobiles. Un mobile requiert un certain service qui se compose de données à transmettre sous certaines conditions (par exemple de débit ou de délai). Un mobile "actif" est un mobile qui reçoit un tel service.

Le mobile peut requérir deux types de services, à savoir des services en temps réel avec des débits prédéfinis et des services différés avec des débits élastiques.

Le bon fonctionnement d'un réseau de communication sans fil repose sur le contrôle de charge. Le contrôle de charge permet la gestion des accès (appelé également "contrôle d'admission") d'un mobile à une station de base donnée, ainsi que la gestion de la charge d'une station de base donnée (appelé également "contrôle de congestion") pour garantir une qualité de service (QoS). Plus précisément, le contrôle d'admission permet de déterminer pour une station de base donnée si un nouveau mobile peut être servi par la station de base tandis que le contrôle de congestion permet de contrôler la charge induite par l'ensemble des mobiles servis par la station de base (dits mobiles "actifs").

Le document *"Downlink admission control strategies for cdma systems in a manhattan environment.* Vehicular Technology Conference, 2:1453 -1457, 1998" de M. Persson J. Knutsson, P. Butovitsch et R. D. Yates décrit des réalisations dites "à contrôle de charge direct".

Dans les réalisations "à contrôle de charge direct", le contrôle de charge est fondé sur une comparaison entre un indicateur de charge calculé pour une station de base donnée, et une valeur de seuil, appelée seuil de charge. Le contrôle d'admission, selon ces réalisations, autorise l'accès d'un nouveau mobile à une station de base donnée s'il peut être servi sans pousser l'indicateur de charge au-delà du seuil de charge. Dans les réseaux de communication par voie descendante, un tel indicateur de charge dépend généralement de la puissance de transmission de la station de base qui fluctue dans le temps. Le seuil de charge doit donc être choisi avec une marge de sécurité importante. Par ailleurs, la charge additionnelle induite par un nouveau mobile est estimée de manière approximative. Enfin, dans de telles réalisations à contrôle de charge direct, des coupures de communication peuvent se produire, même instantanément après l'admission d'un nouveau mobile et l'accès à une station de base peut être refusé à plus de mobiles que nécessaire.

Le document *"Soft and safe admission control in cellular networks,* IEEE Transaction on Networking, 5 (2):414-418, April 1997"*,* de Zvi Rosberg Michael Andersin et Jens Zander et le document *"Channel access algorithms with active link protection for wireless communication networks with power control,* IEEE/ACM Transactions in Networking, 8(5):583-596, october 2000" de N. Bambos, S.C. Chen, et G.J. Pottie décrivent d'autres réalisations dites à "contrôle de charge à essai".

Dans les réalisations à "contrôle de charge à essai", le contrôle d'admission autorise temporairement l'accès d'un nouvel utilisateur à une station de base jusqu'à ce qu'une décision soit prise. Les contrôles de charge à essai ont l'avantage de garantir qu'aucune coupure ne se produira, du moins au moment de la décision, mais ont l'inconvénient d'être excessivement longs, de sorte qu'ils sont rarement utilisables en pratique.

La demande de brevet français FR 2 851 401 propose un procédé et un dispositif de contrôle de charge basé sur une comparaison entre un indicateur de charge calculé pour une station de base donnée, et une valeur de seuil, appelée seuil de charge, comme dans les réalisations à contrôle de charge direct.

Dans la demande de brevet FR 2 851 401, l'indicateur de charge dépend seulement des atténuations entre les utilisateurs et les antennes, et des seuils signal sur bruit et interférence (SINR). Ainsi, ils ne dépendent pas des puissances de transmission. Toutefois, dans le procédé et le dispositif de cette demande de brevet, le contrôle de charge est réalisé sans prendre en compte les limitations de puissance. De telles limitations de puissances sont en général imposées par une norme qui fixe la puissance maximale qu'une station de base est autorisée à émettre.

L'invention vient améliorer la situation.

A cet effet, l'invention propose un procédé de contrôle d'un réseau de communication sans fil, ayant les caractéristiques définies dans l'une des revendications 1 à 23.

L'invention propose en outre un dispositif de contrôle pour réseau de communication sans fil, ayant les caractéristiques définies dans l'une des revendications 24 à 38.

D'autres caractéristiques et avantages de l'invention apparaîtront à l'examen de la description détaillée ci-après, ainsi que des dessins annexés sur lesquels:

- les figures 1a et 1b représentent des cellules d'un réseau de communication sans fil,

- la figure 1c est un schéma représentant un réseau de communication sans fil,
- la figure 1d illustre la faisabilité du contrôle de puissance,
- les figures 2a à 2c sont des schémas fonctionnels du dispositif de contrôle de charge selon l'invention,
- la figure 2d est un ordinogramme représentant les étapes de calcul de la charge élémentaire induite par un mobile sur une station de base,
- la figure 3 est un ordinogramme représentant les étapes de l'allocation de puissance décentralisée dans une cellule du réseau selon l'invention,
- la figure 4 est un ordinogramme représentant les étapes d'un contrôle d'admission d'un nouveau mobile à une station de base selon l'invention, et
- la figure 5 est un ordinogramme représentant les étapes d'un contrôle de congestion dans une cellule du réseau, selon l'invention.

L'annexe 1 comprend les formules mathématiques utilisées dans les modes de réalisation de l'invention.

Les dessins et l'annexe contiennent, pour l'essentiel, des éléments de caractère certain. Ils pourront donc non seulement servir à mieux faire comprendre la description, mais aussi contribuer à la définition de l'invention, le cas échéant.

La Figure la représente un réseau de communication sans fil ou réseau cellulaire comprenant deux stations de base u et v. Une station de base, que l'on pourra abréger en "station" ou "antenne", comporte une antenne-réseau qui peut être directionnelle ou omnidirectionnelle et l'ensemble électronique associé à celle-ci.

Chaque station de base sert les mobiles localisés dans une certaine zone géographique appelée cellule.

Les expressions "poste d'utilisateur" ou "équipement d'utilisateur" ou "mobile" ou même "utilisateur" désignent tout appareil capable de communication sans fil, et éventuellement susceptible de mobilité.

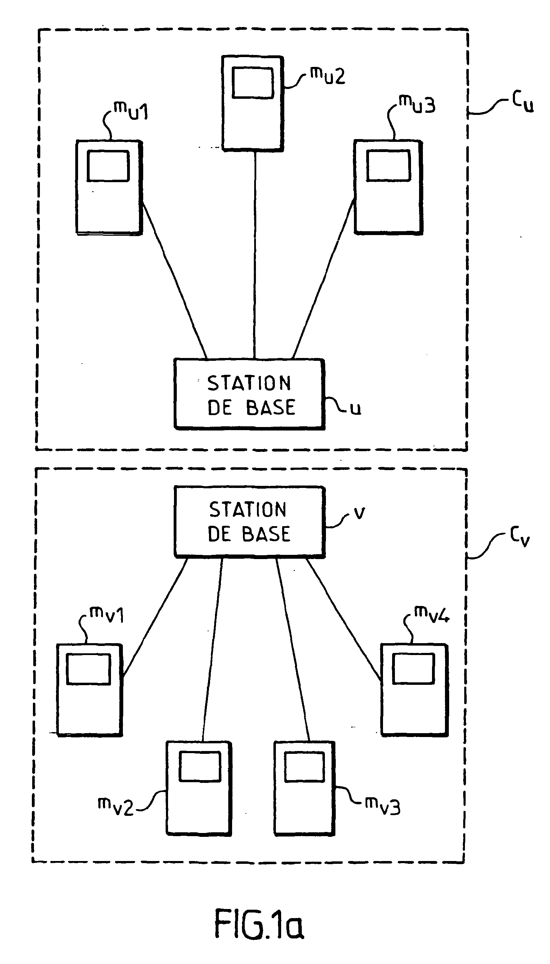

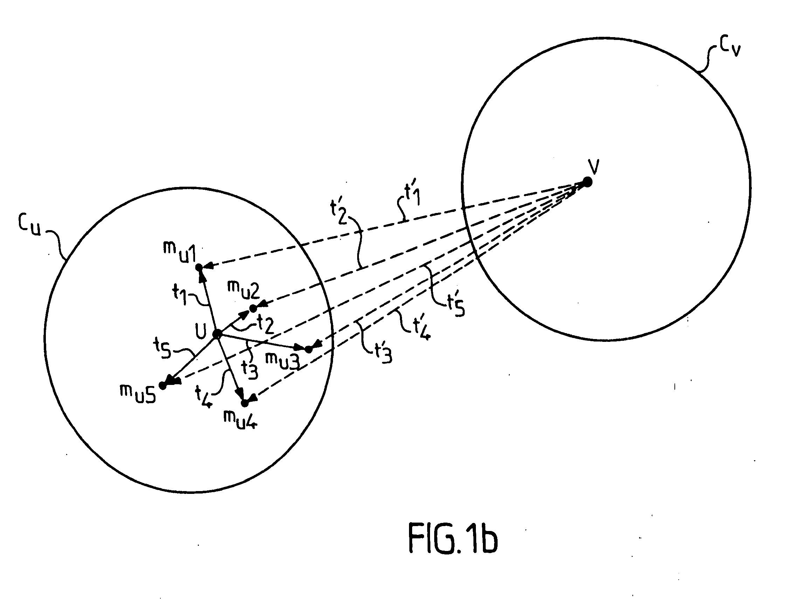

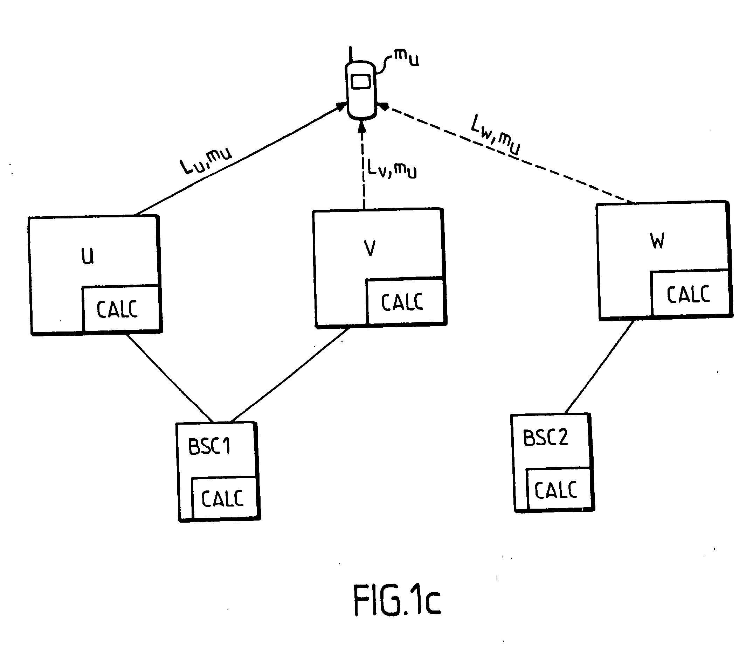

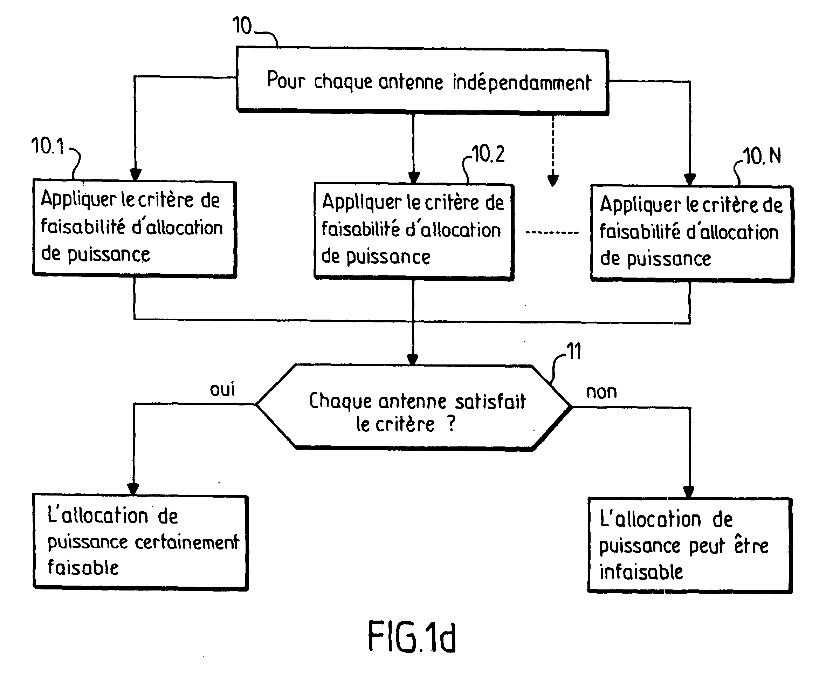

Dans l'exemple de la figure 1 a, la station de base u sert les mobiles $m_{u1}$, $m_{u2}$ et $m_{u3}$ localisés dans la cellule $C_u$ et la station de base v sert les mobiles $m_{v1}$, $m_{v2}$, $m_{v3}$ et $m_{v4}$ localisés dans la cellule $C_v$. La notation $m_x$ désignera ci-après un mobile servi par une station de base x. De plus, sur la figure 1 a, les cellules sont représentées par des rectangles, à titre d'exemple, mais peuvent avoir n'importe quelle autre forme. Les cellules peuvent avoir une intersection appelée zone de "handover".

A chaque instant, un mobile est caractérisé par une position géographique, un certain service requis et une station de base serveuse, e.g. u ou v. Ces caractéristiques constituent une configuration des mobiles.

La Figure 1 b représente un exemple de configuration des mobiles servis par une station de base u. La station de base u de cellule Cu établit une communication avec les mobiles $m_{u1}$, $m_{u2}$, $m_{u3}$ et $m_{u4}$ qu'elle sert. Ces trajets de la station serveuse u aux mobiles servis sont désignés par t1, t2, t3, t4 et t5 sur la figure 1b. Les trajets de la station voisine v aux mobiles servis par la station de base u sont désignés par t'1, t'2, t'3, t'4 et t'5 sur la figure 1b.

Le contrôle de charge repose en partie sur les pertes de propagation le long de ces trajets, appelées atténuations.

Une station est dite "serveuse" pour un mobile si elle fournit un service à ce mobile. Dans la description ci-après l'expression "station serveuse" sera également utilisée pour désigner une station pour laquelle on effectue un contrôle d'admission d'un mobile.

Une station est dite "voisine" pour un mobile si le mobile peut mesurer son atténuation vis à vis de cette station.

La figure 1 c représente un réseau de communication comprenant trois stations de base u, v et w. Un mobile $m_u$ est servi par la station de base u. Il existe des atténuations $L_{v,mu}$ et $L_{w,mu}$ entre chaque station voisine v, w et le mobile $m_u$ et des atténuations $L_{u,mu}$ entre la station serveuse u et le mobile $m_u$. Le mobile $m_u$ remonte les valeurs des atténuations $L_{v,mu}$ et $L_{w,mu}$ à sa station serveuse u.

Les stations de base u, v et w peuvent être munies d'un calculateur CALC pour réaliser le contrôle de charge. En variante, lorsqu'elles n'ont pas les capacités suffisantes pour être équipées d'un tel calculateur, le contrôle de charge est effectué par un contrôleur de station de base BSC1 ou BSC2.

Chaque station de base est en effet reliée à un contrôleur de station de base, qui peut être commun à plusieurs stations. Par exemple, les stations de base u et v sont reliées au contrôleur de station de base BSC 1 et la station de base w est reliée au contrôleur de station de base BSC2.

Un contrôleur de station de base est en général responsable de toutes les fonctions liées à la transmission radio, comme le maintien de la communication lorsque le mobile se déplace d'une cellule à une autre appelé "handover", la gestion des ressources du réseau et les données relatives à la configuration des cellules.

Les réseaux de communication sans fil comprennent une couche de transmission entre le réseau et le client contrôlée par un protocole, par exemple le protocole CDMA ("Code Division Multiple Access"). Ce protocole permet notamment à chaque mobile d'utiliser la même large bande de fréquence. Pour un mobile $m_u$ donné d'une cellule donnée $C_u$, ce protocole CDMA utilise des codes orthogonaux ou pseudo-orthogonaux pour filtrer le signal qui lui est destiné à partir de la superposition de tous les signaux émis par les stations de base.

Les signaux émis par les stations de base sont atténués de manière à former un bruit pour le mobile $m_u$ tel que le seuil du rapport du signal émis par la station de base serveuse u sur le bruit soit supérieur à un seuil $\xi m_u$, qui représente le seuil du rapport signal sur-interférence-et-bruit nécessaire à la réception par le mobile $m_u$ du signal émis par la station u. Ce seuil est défini en fonction du débit de bits (en bits par seconde) ou "bit rate" que le mobile souhaite.

Afin d'établir une communication par voie descendante entre la station de base u et un mobile mu, la puissance totale $P_{u,mu}$ du signal dédié à un mobile $m_u$ par une station de base u doit être suffisante pour couvrir le bruit des communications avec d'autres mobiles et pour pouvoir être reçu par le mobile $m_u$ considéré. Cette contrainte correspond à un problème d'allocation de puissance sur la voie descendante. Il existe des situations où l'allocation de puissance est infaisable.

Le contrôle de charge vise à assurer la faisabilité de l'allocation de puissance.

La réalisation décrite dans le document *"Performance of optimum transmitter power control in cellular radio systems,* IEEE Trans. Veh. Technol., 41:57-b2,1992"* de J.Zander, fournit un critère global qui assure la faisabilité de l'allocation de puissance sur la base du rayon spectral d'une matrice. Cependant, cette réalisation n'est pas décentralisée en ce sens que chaque station de base n'est pas apte à appliquer le critère de faisabilité de l'allocation de puissance indépendamment des mobiles des autres stations de base.

La demande de brevet français FR 2 851 401 propose un procédé et un dispositif permettant de vérifier si le problème de contrôle de puissance est faisable ou non, sans essayer de le résoudre, et ce de manière décentralisée.

La demande de brevet français FR 2 851 401 repose sur une comparaison entre un indicateur de charge, et un seuil de charge, l'indicateur de charge prenant en compte les atténuations entre les mobiles et les stations de base, et les seuils signal sur bruit et interférence (SNIR). Comme indiqué précédemment, le procédé et le dispositif de la demande de brevet français FR 2 851 401 ne prennent pas en compte les limitations de puissance. Le critère de faisabilité d'allocation de puissance défini dans la demande de brevet français FR 2 851 401 repose sur la vérification des seuils SINR uniquement. Il n'est donc plus adapté dans les environnements où la puissance émise par chaque station de base est limitée par une norme.

Il pourra être fait référence au contenu descriptif de la demande de brevet FR 2 851 401 pour plus de détails.

L'invention propose un critère décentralisé de faisabilité d'allocation de puissance propre à prendre en compte les limites de puissance des stations de base et la puissance des canaux communs, ainsi qu'un contrôle de charge basé sur ce critère.

Bien que certains de ses aspects puissent aussi s'appliquer au sens montant (notamment comme décrit dans une autre demande de brevet déposée le même jour) la présente description vise principalement le sens descendant.

La figure 1d est un organigramme représentant le critère décentralisé de faisabilité d'allocation de puissance. A l'étape 10, le contrôleur de charge effectue en parallèle les opérations 10.1 à 10.N pour vérifier individuellement si chaque station de base u1 à uN satisfait le critère de faisabilité d'allocation de puissance (opération 11). Si toutes les stations de base satisfont le critère, l'allocation de puissance est certainement faisable et si au moins une station de base ne satisfait pas le critère, l'allocation de puissance peut être infaisable.

Le problème de faisabilité d'allocation de puissance selon l'art antérieur est représenté par l'inéquation A de la partie 1.211 de l'annexe 1. Cette inéquation traduit le fait que le rapport des signaux atténués sur un ensemble d'interférences - représenté par le membre de droite de l'inéquation A - doit être supérieur à un seuil donné représentant le seuil signal-sur-interférence-et-bruit $\xi m_u$.

L'ensemble des interférences comprend un bruit extérieur au réseau N reçu par le mobile considéré, le bruit provenant des communications intra-cellulaires $B_{int}$ et le bruit provenant des communications extra-cellulaires $B_{ext}$. Le bruit provenant des communications intra ou extra-cellulaires est défini en fonction des puissances totales des stations de base.

Les formules fournissant $B_{int}$ et $B_{ext}$ sont données respectivement par les équations 1.212 et 1.213.

L'allocation de puissance pour le sens descendant est donc faisable si des puissances non négatives $P_{u,mu}$ existent pour toutes les stations de base u servant des mobiles $\{m_u\}$ qui satisfont la condition représentée par l'inéquation A.

Dans un environnement où une limitation de puissance est imposée pour chaque station de base, l'allocation de puissance pour le sens descendant est faisable si la condition représentée par l'inéquation B de la partie 1.211 de l'annexe 1 est également satisfaite. Cette condition supplémentaire traduit le fait que la puissance totale Pv de chaque station voisine v ne doit pas dépasser sa limite de puissance $P_{lim}(v)$.

La Demanderesse a trouvé que les deux conditions représentées par les inéquations A et B sont simultanément satisfaites si la condition représentée par l'inéquation 1.221 est satisfaite. Les équations 1.222 à 1.23 fournissent les différents termes de cette inéquation.

Le membre de gauche de l'inéquation représente l'indicateur de charge Ich(u) d'une station de base u et le membre de droite représente le seuil de charge.

Cette inéquation définit un critère de faisabilité d'allocation de puissance. Ainsi, lorsque le critère est satisfait, l'allocation de puissance peut être faisable. Une recherche de ces puissances, par exemple par itération, s'avérera alors fructueuse.

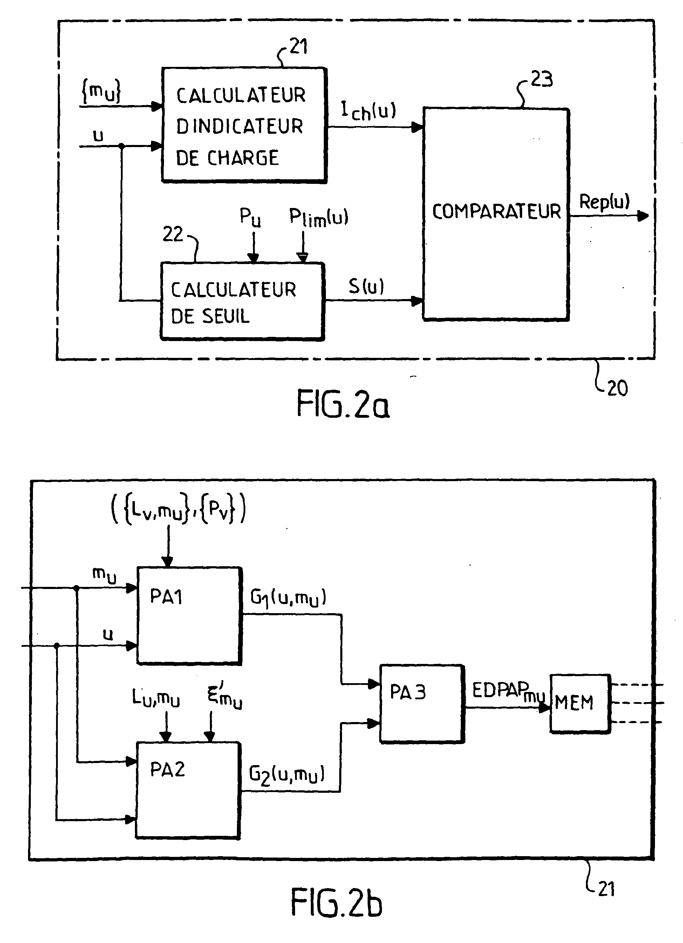

Les figures 2a à 2c sont des schémas fonctionnels représentant un dispositif de contrôle de charge selon l'invention. Le dispositif de contrôle de charge selon l'invention, désigné ci-après par "contrôleur de charge", peut être compris dans le calculateur de la station de base de réseau, par exemple "Node-B" dans l'UMTS. En variante, lorsque la station de base ne peut être munie d'un tel calculateur, le dispositif de contrôle de charge est compris dans le calculateur du contrôleur de la station de base du réseau, par exemple "RNC" dans UMTS.

En référence à la figure 2a, le contrôleur de charge 20 comprend un calculateur d'indicateur de charge 21 propre à calculer un indicateur de charge Ich(u) pour une station de base u donnée servant un ensemble prédéfini de mobiles {$m_u$}. Le contrôleur de charge comprend en outre un calculateur de seuil 22 propre à calculer un seuil de charge S(u) pour l'antenne u, à partir de la limite de puissance totale $P_{lim}$(u) de la station de base u et de la puissance Pu' des canaux communs de la station de base. La limite de puissance $P_{lim}$(u) d'une station de base u désigne ici la limite de puissance totale émise par la station de base u éventuellement réduite d'une marge de sécurité. La limite de puissance $P_{lim}$(u) de la station de base u et la puissance Pu' des canaux communs de la station de base peuvent prendre en compte le gain d'antenne G.

Le contrôleur de charge comprend par ailleurs un comparateur 23 capable de comparer l'indicateur de charge Ich(u) de l'antenne u au seuil S(u) et de fournir une réponse Rep(u) à partir de laquelle le contrôleur de charge peut modifier certains paramètres de la configuration des mobiles.

Le contrôleur de charge peut comprendre une fonction de réduction de charge propre à réduire le nombre de mobiles demandant à être servis par une station donnée selon le résultat Rep(u) fourni par le comparateur.

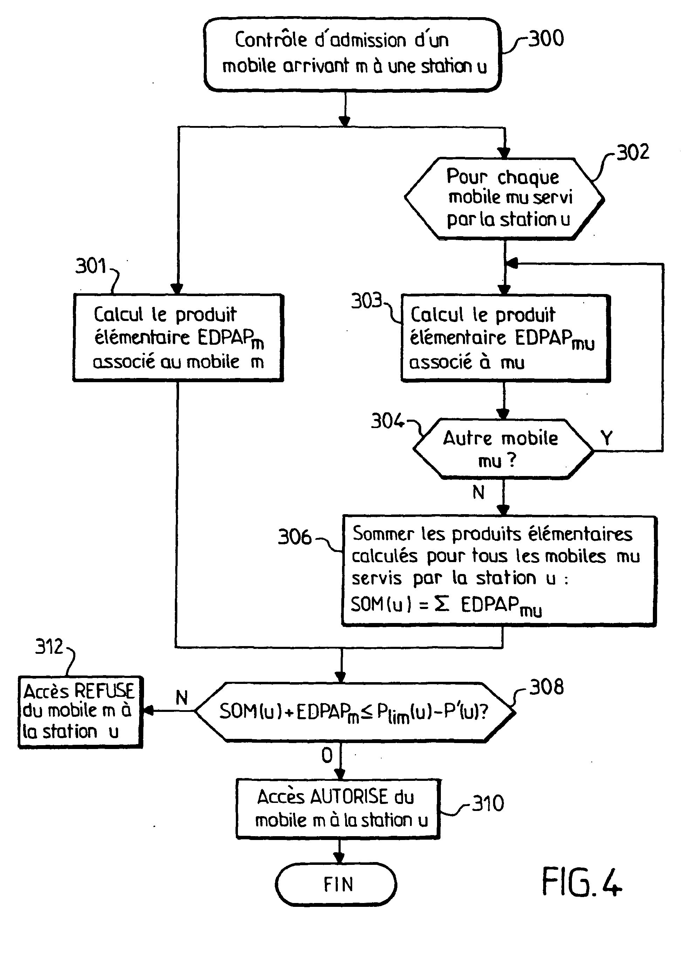

Le contrôleur de charge peut en outre comprendre un contrôleur d'accès propre à effectuer le contrôle d'admission d'un mobile. Ainsi, le contrôleur d'accès est apte à autoriser un accès à une station serveuse donnée u pour un mobile "candidat" ou "arrivant" en fonction du résultat Rep(u) fourni par le comparateur, conformément à l'organigramme de la figure 4.

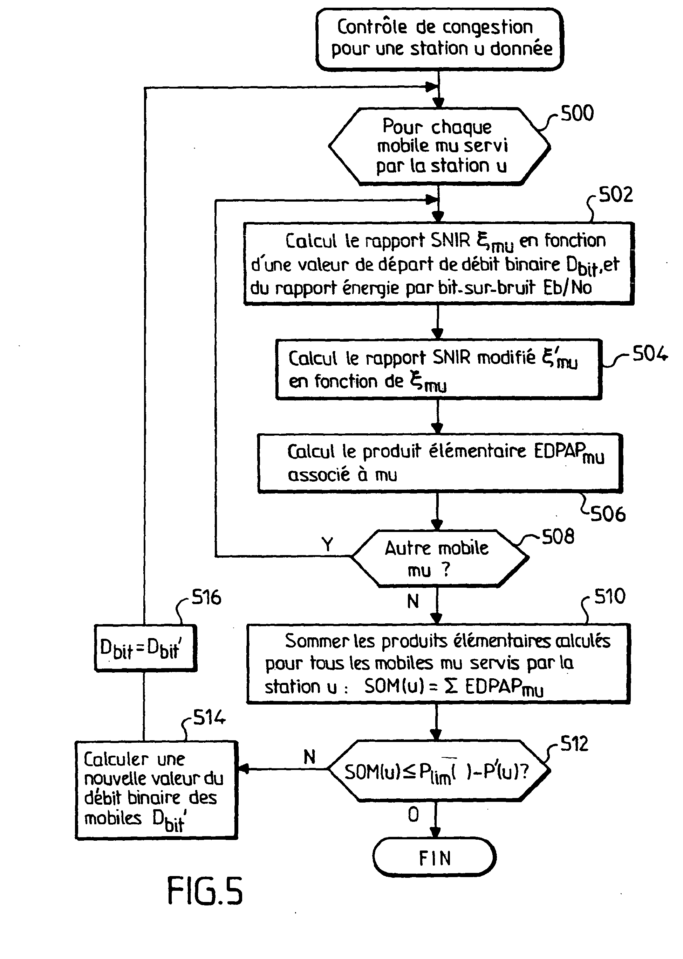

Le contrôleur de charge peut également comprendre un régulateur de charge propre à effectuer le contrôle de congestion. Le régulateur de charge est apte à modifier le débit de bits des mobiles en fonction du résultat Rep(u) fourni par le comparateur, conformément à l'organigramme de la figure 5.

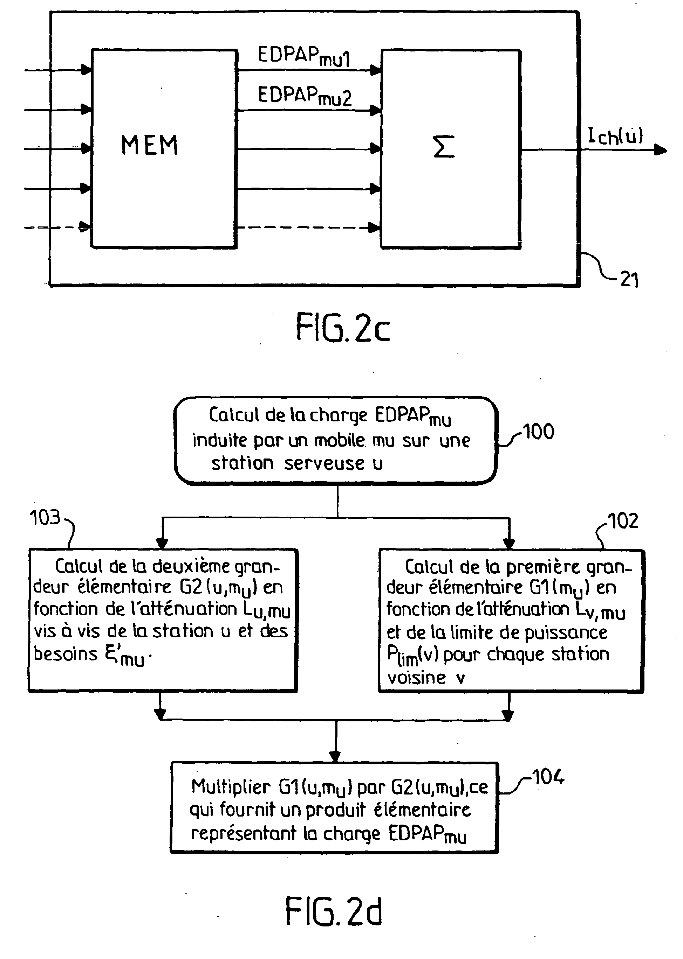

Les figures 2b et 2c sont des schémas fonctionnels représentant la structure du calculateur d'indicateur de charge 21 de la figure 2a.

Le calculateur d'indicateur de charge 21 selon l'invention comporte un calculateur de charge élémentaire propre à calculer la charge élémentaire $EDPAP_{mu}$ induite par un mobile sur une station serveuse donnée.

En référence à la figure 2b, le calculateur de charge élémentaire comporte une première fonction PA1 pour calculer une première grandeur élémentaire G1(u, $m_u$) pour chaque mobile $m_u$ servi la station de base u. Cette première grandeur élémentaire prend en compte l'atténuation Lv,$m_u$ du mobile vis-à-vis de chaque station de base voisine v, et la limite de puissance $P_{lim}$(v) de chacune de ces antennes voisines. Chaque mobile $m_u$ remontent à sa serveuse u les mesures des atténuations

Lv,$m_u$ vis-à-vis des stations voisines v.

Le calculateur de charge élémentaire selon l'invention comporte également une deuxième fonction PA2 pour calculer une deuxième grandeur élémentaire G2(u, $m_u$) pour le mobile $m_u$ servi par la station de base u. Cette deuxième grandeur élémentaire prend en compte l'atténuation Lu,$m_u$ entre le mobile $m_u$ et sa station serveuse u, et les besoins du mobile ξ'$m_u$ vis à vis de station serveuse u.

Le calculateur de charge élémentaire selon l'invention comporte une troisième fonction PA3 propre à effectuer le produit de la première grandeur élémentaire G1(u,$m_u$) par la deuxième grandeur élémentaire G2(u, $m_u$) pour le mobile $m_u$ servi par la station u.

Le calculateur d'indicateur de charge 21 est apte à calculer des produits élémentaires respectifs pour un ensemble prédéfini de mobiles {$m_u$} relevant d'une station serveuse u donnée, ce qui fournit un ensemble de produits élémentaires {$EDPAP_{mu}$}. Chaque produit élémentaire $EDPAP_{mu}$ représente ainsi la charge induite par un mobile $m_u$ sur la station de base u.

Les charges $EDPAP_{mu}$ pour la station de base u peuvent être stockées dans une mémoire MEM au fur et à mesure de leur calcul.

On se réfère maintenant à la figure 2c qui est un schéma complémentaire du schéma de la figure 2b. La mémoire MEM est représentée dans un état tel que toutes les charges élémentaires $EDPAP_{mu1}$, $EDPAP_{mu2}$, etc., des mobiles servis par la station de base u ont été calculées et stockées. Le calculateur d'indicateur de charge 21 comporte une fonction de sommation Σ propre à sommer les différentes charges additionnelles stockées dans la mémoire MEM, ce qui fournit l'indicateur de charge Ich(u).

La figure 2d est un organigramme représentant les étapes de calcul de la charge élémentaire $EDPAP_{mu}$ induite par un mobile $m_u$ sur une antenne u.

A l'étape 100, le contrôleur de charge reçoit un mobile $m_u$ et une station serveuse u pour calculer la charge élémentaire $EDPAP_{mu}$ induite par ce mobile sur la station u.

A l'étape 102, le contrôleur de charge calcule une première grandeur élémentaire G1(u,$m_u$) prenant en compte l'atténuation Lv,$m_u$ entre le mobile $m_u$ et chaque station voisine v et la puissance limite Pv de chacune de ces stations voisines v.

Plus précisément, le calcul de G1(u,$m_u$) comprend les calculs élémentaires suivants pour une station voisine v donnée, conformément à l'équation 1.222 de l'annexe 1 :

- la division de la limite de puissance totale émise par ladite station voisine $P_{lim}$(v) par l'atténuation du mobile vis-à-vis de la station voisine Lv,$m_u$,
- la multiplication de la valeur obtenue par le facteur d'orthogonalité $α_{uv}$ entre la station serveuse et ladite station voisine v, ce qui donne une grandeur intermédiaire, g1(u, $m_u$,v), conformément à l'équation 1.223.

Ce calcul élémentaire est effectué pour chaque station voisine. Les valeurs g1(u,mu,v) obtenues pour les différentes stations voisines v sont alors sommées, ce qui fournit une valeur G'1(u, $m_u$). Le bruit extérieur au réseau N transmis au mobile $m_u$ par la station u est alors ajouté à la valeur G'1(u,$m_u$), ce qui fournit ladite première grandeur élémentaire G1(u,$m_u$) pour le mobile $m_u$, conformément à l'équation 1.222.

A l'étape 103, le contrôleur de charge calcule alors la deuxième grandeur élémentaire G2(u,mu) à partir de l'atténuation Lu,$m_u$ entre le mobile $m_u$ et la station serveuse u et des besoins de l'utilisateur représentés par le seuil du rapport signal-sur-bruit-et-interférence modifié ξ'$m_u$. Le seuil du rapport signal-sur-bruit-et-interférence (SNIR) modifié ξ'$m_u$ dépend du seuil du rapport signal-sur-bruit-et-interférence ξ$m_u$ et du facteur d'orthogonalité α de la station u.

Plus précisément, le calcul de G2(u,$m_u$) comprend la multiplication SNIR modifié par l'atténuation Lu, $m_u$ entre le mobile $m_u$ et la station serveuse u, conformément à l'équation 1.224 de l'annexe 1.

A l'étape 104, le contrôleur de charge multiplie alors la première grandeur élémentaire G1(u,$m_u$) par la deuxième grandeur élémentaire G2(u,$m_u$), ce qui fournit un produit élémentaire associé au mobile $m_u$. Ce produit élémentaire représente la charge élémentaire EDPAP$_{mu}$ induite par le mobile $m_u$ sur la station de base u.

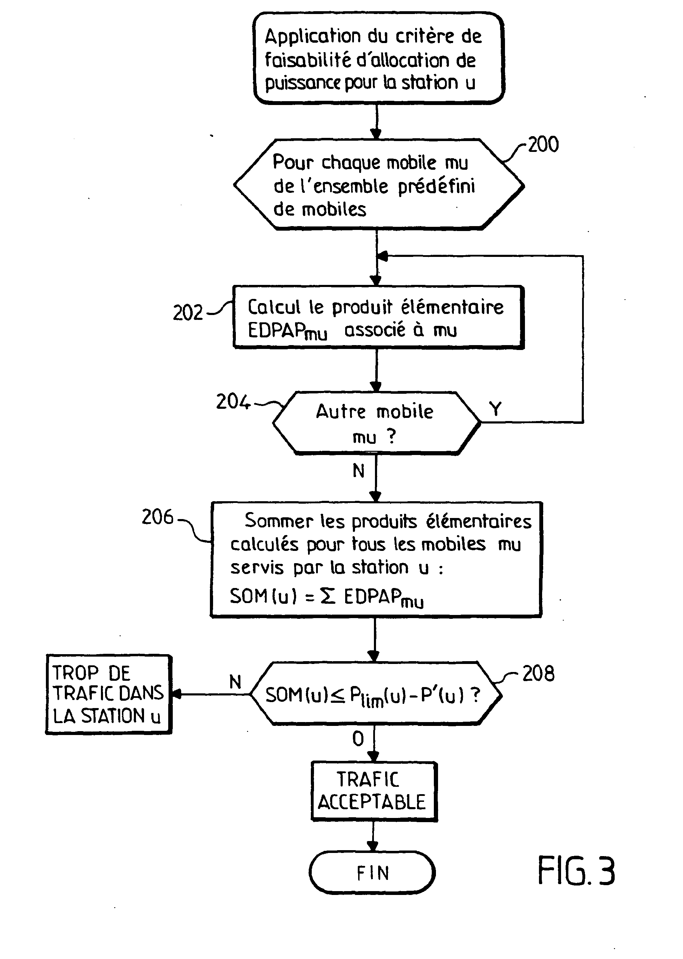

La figure 3 est un organigramme représentant les opérations effectuées par le contrôleur de charge pour contrôler le trafic d'une station de base u, selon le critère de faisabilité d'allocation de puissance de l'invention.

A l'étape 200, le contrôleur de charge sélectionne un mobile $m_u$ d"un ensemble prédéfini de mobiles comprenant les mobiles servis par la station u.

Le contrôleur de charge effectue l'opération 202 de calcul du produit élémentaire EDPAP$_{mu}$, représentant la charge élémentaire induite par le mobile $m_u$ sur la station de base u. Le calcul de la charge EDPAP$_{mu}$ est détaillé sur la figure 2d.

Si le test 204 indique que tous les mobiles servis par la station u n'ont pas été traités, le contrôleur de charge réitère les opérations 202 à 204 pour un autre mobile $m_u$ servi par la station de base u.

Le contrôleur de charge effectue alors la sommation de toutes les charges EDPAP$_{mu}$ calculées pour un ensemble de mobiles prédéfini. L'ensemble de mobiles comprend les différents mobiles $m_u$ servis par la station de base u, à l'étape 206.

A l'étape 208, la somme SOM(u) calculée à l'étape 206 est comparée au seuil S(u) représentant la différence entre la puissance limite P$_{lim}$(u) de la station de base u et la puissance P'(u) des canaux communs de la station de base u.

La somme SOM(u) représente l'indicateur de charge Ich(u) de la station u. Si la somme SOM(u) est inférieure ou égale au seuil S(u), alors le trafic des signaux de la station u est acceptable. Sinon, la station de base u présente un trafic trop important.

Le trafic permet de caractériser un état de surcharge de la station de la station de base u.

La surcharge d'une station u peut comprendre:

- un nombre trop important de mobiles à demande de débit fixe pour la station et dans ce cas l'étape 208 de la figure 3 n'est pas vérifiée pour cette station, et/ou

- un état de congestion détecté pour la station u et dans ce cas l'étape 208 de la figure 3 n'est pas vérifiée pour cette station après calcul des seuils du rapport signal-sur-bruit-et-interférence en fonction des débits de bit demandés par chaque mobile de la station. Lors de l'application du contrôle de congestion, les seuils du rapport signal-sur-bruit-et-interférence peuvent alors être calculés pour éviter cet état de congestion.

Le procédé décrit dans la figure 3 permet de détecter un état de surcharge pour un ensemble de mobiles prédéfinis servis par une station de base u. Le contrôleur de charge peut appliquer ce procédé pour réaliser un contrôle d'admission et/ou de congestion.

Dans un mode de réalisation de l'invention, dans lequel les mobiles de l'ensemble prédéfini de mobiles ont une demande de débit fixe, le procédé d'allocation de puissance décentralisé de la figure 3 est utilisé pour réaliser un contrôle d'admission global.

Le contrôle d'admission global vise à réduire la population de mobiles servis par une station donnée de sorte que la condition 1.23 soit satisfaite et qu'ainsi le contrôle de puissance sur la voie descendante soit faisable.

Selon ce mode de réalisation, le contrôleur de charge évalue tout d'abord si un ensemble prédéfini de mobiles pour une station de base u vérifie l'inégalité de l'étape 208 de la figure 3. Dans ce mode de réalisation, l'ensemble prédéfini de mobiles comprend la population de mobiles demandant à être servis par la station u. Lorsque la population de mobiles {mu} de la station de base u ne vérifie pas cette inégalité, un état de surcharge de la station u est détecté.

Dans ce cas, le contrôleur de charge peut corriger cette surcharge en réduisant la population de mobiles {$m_u$} de la station u considérée afin que l'inégalité de l'étape 208 soit vérifiée.

Plus précisément, le contrôleur de charge est apte à déterminer pour la station u considérée un sous-ensemble de mobiles E({$m_u$}) contenu dans l'ensemble prédéfini de mobiles {$m_u$} tel que pour ce sous-ensemble de mobiles, le problème de contrôle de puissance pour la station j sur la voie descendante soit faisable, i.e. tel que l'inégalité de l'étape 208 soit vérifiée.

Selon un mode de réalisation particulier, la station u peut calculer indépendamment des autres stations le sous-ensemble $E(\{m_u\})$. Plus précisément, à la détection d'une surcharge à l'étape 208 de la figure 3 pour une population de mobile $\{mu\}$ donnée ayant une demande de débit de bits fixe vis-à-vis d'une station u, la population de mobiles de la station est réduite à $E(\{m_u\})$ et le critère décentralisé de faisabilité d'allocation de puissance de la figure 3 est réitéré pour la station u et pour la nouvelle population de mobiles $E(\{m_u\})$ jusqu'à ce que l'on trouve une population de mobiles $E'(\{m_u\})$ qui vérifie l'inégalité de l'étape 208.

La population de mobiles $E'(\{m_u\})$ est alors correctement desservie par la station u et le trafic est acceptable.

Selon ce mode de réalisation particulier, la sommation des charges à l'étape 206 peut être effectuée pas à pas et selon un ordre prédéterminé, auquel cas la comparaison de l'étape 208 est effectuée pour chaque somme intermédiaire. L'étape de sommation 206 comprend alors les étapes suivantes:

1) selon l'ordre prédéterminé, la sélection d'une charge élémentaire $EDPAP_{mu}$ associée à un mobile donné,
2) l'ajout de la charge élémentaire $EDPAP_{mu}$ à une valeur de départ, ce qui fournit une somme courante $SOM_{cour}(u)$,
3) la vérification de la condition de l'étape 208 pour une valeur $SOM(u)$ prisé égale à $SOM_{cour}(u)$.

Si la condition n'est pas vérifiée à l'étape 3), la sommation est interrompue et les mobiles pour lesquels la charge élémentaire a été sommée précédemment à l'étape 2) sont compris dans la population de mobiles $E'(\{m_u\})$ acceptés par la station u. Le mobile $m_u$ et les autres mobiles ne sont en revanche pas autorisés à accéder à la station.

Si la condition 3) est vérifiée et si tous les mobiles n'ont pas été traités, les étapes 1) à 3) sont réitérées avec une valeur de départ prise égale à $SOM_{cour}(u)$.

A la première itération des étapes 1) à 3), la valeur de départ est nulle.

L'ordre dans lequel les charges élémentaires des mobiles sont sommées peut être par exemple:

- l'ordre croissant des valeurs des charges élémentaires, appelé ordre croissant, ou
- un ordre aléatoire, et
- un ordre déduit d'une priorité prédéfinie entre les mobiles.

L'ordre croissant permet d'obtenir une population de mobiles maximale servis par la station mais ne permet pas à des mobiles éloignés de la station d'être en communication avec celle-ci.

L'ordre aléatoire permet à des mobiles plus éloignés de la station de dépendre de celle-ci. Cet ordre assure une bonne robustesse à la mobilité.

Une fois que le contrôle d'admission global est établi pour une station u, l'état de trafic est acceptable pour la station u.

En complément, de nouveaux mobiles "candidats" ou "arrivant" peuvent demander un accès à la station u. Le contrôleur de charge peut alors effectuer un contrôle d'admission individuel ou contrôle d'accès. Ce mode de réalisation complémentaire est représenté par l'organigramme de la figure 4.

A l'étape 300, un nouveau mobile "arrivant" m demande l'admission à une station u. A l'étape 301, la charge additionnelle $EDPAP_m$ induite par le mobile m sur la station u est calculée conformément à l'organigramme de la figure 2d.

Parallèlement, le contrôleur de charge calcule la charge élémentaire $EDPAP_{mu}$ induite par chaque mobile mu servi par la station u aux étapes 302 à 304 et effectue ensuite une sommation de ces charges élémentaires $EDPAP_{mu}$ à l'étape 306, ce qui fournit la somme $SOM(u)$ représentant l'indicateur de charge courant $Ich(u)$ de la station u. L'indicateur de charge courant $Ich(u)$ pour la station u représente la charge induite sur la station u par les mobiles actifs.

Les étapes 300 à 304 sont équivalentes aux étapes 200 à 206 de la figure 3 appliquées à un ensemble prédéfini de mobiles comprenant les mobiles actifs et le mobile arrivant.

En variante, l'indicateur de charge courant $Ich(u)$ peut avoir été mémorisé au préalable, par exemple à une itération de l'étape 206 de la figure 3 pour les mobiles actifs, lors du contrôle d'admission global. L'indicateur de charge courant $Ich(u)$ pour la station u représente la charge induite sur la station u par les mobiles actifs.

L'indicateur de charge courant $Ich(u)$ est alors ajouté à la charge additionnelle du mobile "arrivant" calculée à l'étape 301, ce qui fournit un nouvel indicateur de charge $Ich'(u)$ pour la station u. Le nouvel indicateur de charge $Ich'(u)$ pour la station u représente la charge qui serait induite sur la station u si elle servait un ensemble de mobiles comprenant les mobiles actifs et le mobile arrivant.

A l'étape 308, le contrôleur de charge détermine si le nouvel indicateur de charge $Ich'(u)$ est inférieur au seuil de charge $S(u)$ représentant la différence entre la puissance limite $P_{lim}(u)$ de la station u et la puissance des canaux communs $P'(u)$ de la station u.

Si le nouvel indicateur de charge $Ich'(u)$ est inférieur au seuil $S(u)$, la station de base u peut accepter le mobile m tout en conservant un trafic acceptable et par suite l'accès à la station u par le mobile m est autorisé, à l'étape 310. Dans le cas contraire, à l'étape 312, l'accès à la station u par le mobile m est refusé.

Un mobile m non accepté par la station u peut être ré-alloué à une autre station v pour laquelle la charge additionnelle $EDAP_{mv}$ induite par le mobile m sur la station v est plus faible ou pour laquelle le nouvel indicateur de charge Ich'(v) est le plus faible parmi les nouveaux indicateurs de charge des différentes stations.

Par exemple, chaque station de base u peut communiquer son indicateur de charge aux autres stations de base du réseau en mode de diffusion large (de l'anglais "broadcast"). Dans ce cas, l'étape 308, pour un mobile m "arrivant" peut être effectuée en parallèle pour toutes les stations de base à un moment donné. Parmi les stations de base vérifiant l'étape 308, le contrôleur de charge détermine la station de base pour laquelle la valeur du nouvel indicateur de charge Ich'(u) est la plus faible. L'accès à cette station est alors accepté pour le mobile m.

Par ailleurs, le procédé de détection d'un état de surcharge pour une station u décrit en référence à la figure 3 peut être utilisé pour effectuer un contrôle de congestion afin d'éviter un trafic pour lequel l'allocation de puissance est infaisable, selon une deuxième mode de réalisation de l'invention.

En particulier, lorsque les mobiles d'une station demandent l'établissement de communication sans bande passante fixe (pour un transfert de données par exemple) et donc un débit de bits variable, le trafic engendré est dit élastique. Un tel trafic élastique peut engendrer un état de congestion. La figure 5 est un organigramme représentant les étapes d'un contrôle de congestion selon le deuxième mode de réalisation de l'invention.

Le procédé de la figure 5 peut être appliqué en parallèle pour chaque station de base du réseau.

A l'étape 500, le contrôleur de charge sélectionne un mobile $m_u$ servi par la station u et calcule le seuil du rapport signal-sur-interférence-et-bruit $\xi m_u$ à l'étape 502 à partir du débit de bit $D_{bit}$, du débit-chip $D_{chip}$ et du rapport énergie-par-bit-sur-bruit Eb/No, conformément à l'équation 1.25. Le débit-chip $D_{chip}$ définit un débit rapporté à la période d'une porteuse ou sous-porteuse utilisée pour l'étalement spectral.

A l'étape 504, le contrôleur de charge calcule alors la grandeur représentant les besoins du mobile ou seuil du rapport signal-sur-interférence-et-bruit modifié $\xi'm_u$ à partir du seuil du rapport signal-sur-interférence-et-bruit $\xi m_u$ et du facteur d'orthogonalité $\alpha$, conformément à l'équation 1.24 de l'annexe 1.

A l'étape 506, le contrôleur de charge calcule alors la charge élémentaire $EDPAP_{mu}$ du mobile $m_u$ pour la valeur du seuil du rapport signal-sur-interférence-et-bruit modifié $\xi'm_u$ calculée.

A l'étape 508, le contrôleur de charge réitère les étapes 500 à 508 pour les autres mobiles actifs de la station u jusqu'à ce qu'ils aient été tous traités.

A l'étape 510, le contrôleur de charge calcule alors l'indicateur de charge Ich(u) (ou SOM(u)) de la station de base u par sommation des charges élémentaires calculées aux étapes 500 à 510.

A l'étape 512, le contrôleur de charge détermine si cet indicateur de charge Ich(u)de la station de base u est inférieur ou égal au seuil S(u).

Si l'indicateur de charge Ich(u)de la station de base u est supérieur au seuil S(u), le contrôleur de charge calcule une nouvelle valeur du débit de bit $D'_{bit}$ inférieure à $D_{bit}$, à l'étape 514, et réitère les étapes 500 à 512 avec une valeur de débit de bit $D_{bit}$ prise égale à $D'_{bit}$, à l'étape 216.

Le dispositif et le procédé de l'invention permettent donc un contrôle de charge décentralisé propre à traiter les populations des mobiles servis par chaque station de base, indépendamment des autres stations.

Les indicateurs de charge selon l'invention ont l'avantage de dépendre seulement des atténuations entre les mobiles et les stations de base, des seuils de signal-sur-interférence-et-bruit tout en prenant en compte les limites de puissance des stations de base et les puissances des canaux communs pour le sens descendant. Par suite, ils ne fluctuent pas.

Dans le cas de l'UMTS, par exemple, les paramètres requis pour calculer les indicateurs de charge sont disponibles. En particulier, il est actuellement possible de mesurer les atténuations entre un mobile et 32 antennes.

Par ailleurs, la charge additionnelle induite par un nouvel utilisateur sur une station de base est calculée avec précision, selon les différents modes de réalisation de l'invention.

Bien évidemment, d'autres variantes de contrôle de charge basées sur l'utilisation de la charge élémentaire induite par un mobile sur une station peuvent être envisagées.

L'invention a une application industrielle dans le domaine de la téléphonie sans fil et concerne un procédé de contrôle de charge d'un réseau de téléphonie sans fil déjà implanté ou en projet. Le procédé peut également être utilisé dans des outils de simulation de ces réseaux.

Annexe 1

1.1- Notations

- $m_u$ : mobile servi par une station de base u.
- $L_{v,m}$ : atténuation entre une antenne v et un utilisateur m.
- $N$ : bruit externe.
- $\alpha$ : facteur d'orthogonalité ($\alpha = 0$ pour parfaitement orthogonal).
- $\alpha_{uv} = 1$ si $v \neq u$
  $\alpha_{uv} = \alpha$ si $v = u$.
- $\xi m_u$ : seuil du rapport-signal-sur-interférence-et-bruit (signal-to-interference-and-noise-ratio SINR) pour l'utilisateur $m_u$.
- $\xi'm_u$ : SINR modifié.
- $P'v$ : puissance des canaux communs pour une sta-

tion de base v.

- **$P_{v,m_v}$ :** puissance du canal dédié au mobile $m_v$.
- **Pv :** puissance totale émise par l'antenne v avec Pv = P'v + $\Sigma_{mv}$ $P_{v,mv}$.
- **$P_{lim}(v)$ :** limite de la puissance totale émise par l'antenne v.

1.2-Equations

**1.21- Conditions de faisabilité d'allocation de puissance**

**(1.211)**

  A)

$$\frac{P_{u,mu} / L_{u,mu}}{N + B_{int} + B_{ext}} \leq \xi_{mu} \; \forall \, \mathbf{u,}$$

  B)

$$P_v \; \leq \; P_{lim}(v) \; \forall \, v$$

**(1.212)**

$$B_{int} = \; \alpha \, (P_u \; - P_{u,mu}) \, / \, L_{u,mu}$$

**(1.213)**

$$B_{ext} = \sum_{v \# u} P_v \, / \, L_{v,mu}$$

**1.22-Critère de faisabilité d'allocation de puissance**

**(1.221)**

$$\sum_{m_u} G1(u,m_u)G2(u,m_u) \leq S(u)$$

**(1.222)**

$$\dot{G}1(u,\dot{m}_u) = \sum_{v} g1(u,m_u,v) + N$$

**(1.223)**

$$g1(u,m_u,v) = \alpha_{uv}.P_{lim}(v) \, / \, L_{v,mu}$$

**(1.224)**

$$\dot{G}2(u,\acute{m}_u) = \xi'm_u.L_{u,mu}$$

**1.23- Seuil de charge**

$$S(u) = P_{lim}(u) - P'(u)$$

**1.24- seuil SINR**

$$\xi_{mu} = \frac{D_{bit}}{D_{chip}} \div \frac{Eb}{N_0}$$

**1.25- seuil SINR modifié**

$$\xi'_{mu} = \frac{\xi_{mu}}{1 + \alpha \xi_{mu}}$$

**Revendications**

1. Procédé de contrôle d'un réseau de communication sans fil, ledit réseau étant constitué de stations (u) communiquant avec des mobiles ($m_u$), par voie descendante, **caractérisé en ce qu'**il comporte pour une station donnée :

  i) pour un mobile ($m_u$) servi par la station (u),

    i1) le calcul (102) d'une première grandeur élémentaire (G1(u,$m_u$)) prenant en compte l'atténuation ($L_{v,mu}$) entre chaque station voisine pour le mobile (v) et le mobile ($m_u$), et la limite de puissance totale émise par chaque station voisine ,

i2) le produit (104) de la première grandeur élémentaire par une deuxième grandeur élémentaire ($G2(u,m_u)$) prenant en compte les besoins, en termes de communication, du mobile vis-à-vis de la station serveuse ($\xi_{mu}'$) et l'atténuation entre la station serveuse et le mobile ($L_{u,mu}$), ce qui fournit un produit élémentaire, et

ii) le contrôle de la liaison entre ladite station serveuse et un ou plusieurs mobiles servis par la station à partir d'un indicateur de charge tiré des produits élémentaires relatifs à chacun des mobiles.

2. Procédé selon la revendication 1, **caractérisé en ce qu'**il comprend en outre, pour un ensemble prédéfini de mobiles comprenant les mobiles servis par une station (u) donnée:

a) l'application (200, 202, 204) de l'étape i) à chaque mobile de l'ensemble, ce qui fournit des produits élémentaires (EDPAPmu),
b) la sommation (206) des produits élémentaires obtenus à l'étape a), et
c) la comparaison (208) d'un indicateur de charge tiré de la sommation faite à l'étape b) à un seuil de charge relatif à la limite de puissance totale émise par la station serveuse ($P_{lim}(u)$) pour effectuer le contrôle de l'étape ii).

3. Procédé selon l'une des revendications 1 et 2, **caractérisé en ce que** l'étape i1) comprend pour une station voisine donnée pour le mobile:

i01) la division de la limite de puissance totale émise par ladite station voisine par l'atténuation entre la station voisine (v) et le mobile ($L_{v,mu}$), et
i02) la multiplication de la valeur obtenue à l'étape i01) par le facteur d'orthogonalité entre la station serveuse et ladite station voisine.

4. Procédé selon la revendication 3, **caractérisé en ce que** l'étape i1) comprend :

i0) l'application des étapes i01) et i02) à chaque station voisine,
i1) la sommation des valeurs obtenues à l'étape i0),
i2) l'ajout du bruit externe à la valeur obtenue à l'étape i1), ce qui fournit ladite première grandeur élémentaire pour ledit mobile donné.

5. Procédé selon l'une des revendications 2 à 4, **caractérisé en ce que** l'étape c) comprend le calcul de la différence entre la limite de puissance totale émise par l'antenne serveuse et la puissance des canaux communs, ce qui fournit ledit seuil de charge.

6. Procédé selon l'une des revendications 2 à 5, **caractérisé en ce que** l'indicateur de charge est égal au résultat de la sommation faite à l'étape b).

7. Procédé selon la revendication 6, **caractérisé en ce que** les mobiles ont une demande de débit fixe, et **en ce qu'**il comprend en outre, si la comparaison de l'étape c) indique que l'indicateur de charge est supérieur au seuil de charge :

d) la réduction du nombre de mobiles de l'ensemble prédéfini de mobiles,
e) une itération des étapes a) à c) appliquées à l'ensemble réduit obtenu à l'étape d).

8. Procédé selon l'une des revendications 2 à 5, **caractérisé en ce que** les mobiles ont une demande de débit fixe, et **en ce que** la sommation des produits élémentaires à l'étape b) est effectuée pas à pas selon un ordre choisi et comprend, pour une valeur de départ donnée:

b1) l'ajout d'un produit élémentaire associé à un mobile donné de l'ensemble prédéfini à ladite valeur de départ, ce qui fournit une somme courante,
b2) une itération de l'étape c) appliquée à un indicateur de charge égal à la somme courante.

9. Procédé selon la revendication 8, **caractérisé en ce** l'étape b) comprend en outre, si la comparaison de l'étape b2) indique que l'indicateur de charge est inférieur ou égal au seuil de charge, une itération des étapes b1) et b2) pour le produit élémentaire suivant, conformément à l'ordre choisi, avec une valeur de départ prise égale à la somme courante obtenue à l'étape b1) précédente.

10. Procédé selon la revendication 9, **caractérisé en ce** l'étape b) comprend en outre, si la comparaison de l'étape b2) indique que l'indicateur de charge est supérieur au seuil de charge, une interruption de la sommation et l'interdiction de l'accès à la station serveuse par le mobile associé au dernier produit élémentaire ajouté et par les mobiles associés aux produits élémentaires suivants, conformément à l'ordre choisi.

11. Procédé selon l'une des revendications 8 à 10, **caractérisé en ce que** la sommation des produits élémentaires est effectuée selon un ordre croissant des produits élémentaires.

12. Procédé selon l'une des revendications 8 à 10, **ca-**

**ractérisé en ce que** la sommation des produits élémentaires est effectuée selon un ordre aléatoire des produits élémentaires.

13. Procédé selon l'une des revendications 8 à 10, **caractérisé en ce que** la sommation des produits élémentaires est effectuée selon un ordre choisi en fonction de priorités prédéfinies entre les mobiles associés.

14. Procédé selon l'une des revendications 8 à 13, **caractérisé en ce que** la valeur de départ est nulle à la première itération de l'étape b1).

15. Procédé selon l'une des revendications 2 à 5, **caractérisé en ce que** les mobiles ont une demande de débit fixe et **en ce qu'**il comprend en outre un contrôle (300) de l'accès d'un nouveau mobile à la station serveuse.

16. Procédé selon la revendication 15, **caractérisé en ce que** l'étape c) comprend la mémorisation de la valeur résultant de la sommation.

17. Procédé selon la revendication 16, **caractérisé en ce que** le contrôle d'accès comprend en outre:

    j1) une itération (301) de l'étape i) pour le nouveau mobile, ce qui fournit un produit élémentaire associé au nouveau mobile,
    j2) l'ajout de ce produit élémentaire à la valeur mémorisée, et
    j3) une itération (308) de l'étape c) appliquée à un indicateur de charge égal au résultat de l'étape j2).

18. Procédé selon la revendication 17, **caractérisé en ce que** l'accès du nouveau mobile à la station serveuse est autorisé (310) si la comparaison de l'étape j3) indique que l'indicateur de charge est inférieur ou égal au seuil de charge.

19. Procédé selon la revendication 17, **caractérisé en ce que** l'accès du nouveau mobile à la station serveuse est refusé (312) si la comparaison de l'étape j3) indique que l'indicateur de charge est supérieur audit seuil de charge.

20. Procédé selon l'une des revendications précédentes, **caractérisé en ce que** l'étape i2) comprend le calcul d'une grandeur représentant les besoins, en termes de communication, du mobile vis-à-vis de la station serveuse ($\xi m_u$') à partir du seuil du rapport-signal-sur-interférence-et-bruit et du facteur d'orthogonalité entre les canaux de la station serveuse.

21. Procédé selon la revendication 20, **caractérisé en ce que** l'étape i2) comprend la multiplication de la grandeur représentant les besoins, en termes de communication, du mobile vis-à-vis de la station serveuse ($\xi m_u$') par l'atténuation entre la station serveuse et le mobile ($L_{u,mu}$), ce qui fournit la deuxième grandeur élémentaire.

22. Procédé selon l'une des revendications 20 et 21, **caractérisé en ce que** le seuil du rapport-signal-sur-interférence-et-bruit est calculé à partir du débit de bits attribué au mobile.

23. Procédé selon la revendication 22 prise en combinaison avec la revendication 6, **caractérisé en ce que** les mobiles ont une demande de débit variable et **en ce que** l'étape i1) comprend au préalable :

    i'01) le calcul du seuil du rapport-signal-sur-interférence-et-bruit en fonction d'une valeur de départ de débit de bits,
    i'02) le calcul de la grandeur ($\xi m_u$') représentant les besoins, en termes de communication, du mobile vis-à-vis de la station serveuse en fonction du seuil du rapport-signal-sur-interférence-et-bruit obtenu à l'étape i'01),

le procédé comprenant en outre, si la comparaison de l'étape c) indique que la somme est supérieure au seuil de charge, une modification de la valeur de départ du débit de bits et une itération des étapes a) à c) pour la nouvelle valeur de départ du débit.

24. Dispositif de contrôle pour réseau de communication sans fil, comprenant des stations communiquant avec des mobiles, par voie descendante, le dispositif comportant :

    - un calculateur de charge élémentaire propre à calculer la charge induite par un mobile ($m_u$) sur une station donnée (u),

**caractérisé en ce que** le calculateur de charge élémentaire comprend :

    - une première fonction (PA1) propre à calculer une première grandeur élémentaire prenant en compte l'atténuation entre chaque station voisine pour le mobile et le mobile ($L_{v,\,mu}$) et la limite de puissance totale émise par chaque station voisine ,
    - une deuxième fonction (PA2) propre à calculer une deuxième grandeur élémentaire prenant en compte les besoins, en termes de communication, du mobile vis-à-vis de la station serveuse ($\xi_{mu}$') et l'atténuation entre la station et le mobile ($L_{u,mu}$),

le calculateur de charge élémentaire étant apte à calculer le produit de la première grandeur élémentaire par la deuxième grandeur élémentaire (PA3), ce qui fournit un produit élémentaire représentant la charge induite par le mobile (EDPAP$_{mu}$), et **en ce que** le dispositif est apte à contrôler la liaison entre chaque station et un ou plusieurs mobiles servis par la station à partir d'un indicateur de charge tiré des produits élémentaires relatifs à chacun desdits mobiles.

**25.** Dispositif selon la revendication 24, **caractérisé en ce qu'**il est apte à calculer les produits élémentaires respectifs pour un ensemble prédéfini de mobiles servis par une station donnée.

**26.** Dispositif selon la revendication 25, **caractérisé en ce qu'**il comprend en outre une fonction de sommation ($\Sigma$) propre à sommer les produits élémentaires calculés.

**27.** Dispositif selon la revendication 26, **caractérisé en ce qu'**il comprend en outre un comparateur (23) interagissant avec la fonction de sommation, le comparateur étant apte à comparer un indicateur de charge (Ich(u)), tiré de la sommation faite par la fonction de sommation pour la station serveuse (u), avec un seuil de charge (S(u)) relatif à la limite de puissance totale émise par la station serveuse (P$_{lim}$(u)).

**28.** Dispositif selon la revendication 27, **caractérisé en ce qu'**il comprend un calculateur de seuil propre à calculer la différence entre la limite de puissance totale émise par la station serveuse (P$_{lim}$(u)) et la puissance des canaux communs de la station serveuse, ce qui fournit ledit seuil de charge (S(u)).

**29.** Dispositif selon l'une des revendications 24 à 28, **caractérisé en ce que** la première fonction (PA1) est apte à diviser la limite de puissance totale émise par une station voisine donnée pour le mobile par l'atténuation entre la station voisine et le mobile (L$_{v,mu}$), et à multiplier la valeur résultant de la division par le facteur d'orthogonalité entre la station serveuse et ladite station voisine, ce qui fournit une grandeur intermédiaire.

**30.** Dispositif selon la revendication 29, **caractérisé en ce que** la première fonction (PA1) est apte à calculer la valeur de la grandeur intermédiaire pour chaque station voisine pour le mobile (v), à sommer les valeurs des grandeurs intermédiaires ainsi obtenues, et à ajouter le bruit externe au résultat de cette sommation, ce qui fournit la première grandeur élémentaire pour ledit mobile.

**31.** Dispositif selon l'une des revendications 27 à 30, **caractérisé en ce qu'**il comprend une fonction de réduction de charge propre à réduire le nombre de mobiles de l'ensemble prédéfini de mobiles associé à la station, si le comparateur (23) indique que l'indicateur de charge est supérieur au seuil de charge.

**32.** Dispositif selon l'une des revendications 27 à 31, **caractérisé en ce que** les mobiles ont une demande de débit fixe, et **en ce qu'**il comprend en outre un contrôleur d'accès pour contrôler l'accès d'un nouveau mobile à la station en fonction du résultat (Rep (u)) fourni par le comparateur (23).

**33.** Dispositif selon la revendication 32, **caractérisé en ce que** le contrôleur d'accès est apte à autoriser l'accès du nouveau mobile (m$_u$) à la station (u) si le résultat fourni par le comparateur (23) indique que l'indicateur de charge est inférieur ou égal au seuil de charge.

**34.** Dispositif selon la revendication 32, **caractérisé en ce que** le contrôleur d'accès est apte à interdire l'accès du nouveau mobile à la station serveuse si le résultat fourni par le comparateur indique que l'indicateur de charge est supérieur au seuil de charge.

**35.** Dispositif selon l'une des revendications 24 à 34, **caractérisé en ce que** la deuxième fonction est apte à calculer une grandeur représentant les besoins, en termes de communication, du mobile vis-à-vis de la station serveuse ($\xi m_u$') à partir du seuil du rapport-signal-sur-interférence-et-bruit et du facteur d'orthogonalité entre les canaux de la stations serveuse.

**36.** Dispositif selon la revendication 35, **caractérisé en ce que** la deuxième fonction (PA2) est apte à multiplier la grandeur représentant les besoins, en termes de communication, du mobile vis-à-vis de la station serveuse ($\xi m_u$') par l'atténuation entre la station et le mobile (L$_{u,mu}$), ce qui fournit la deuxième grandeur élémentaire.

**37.** Dispositif selon l'une des revendications 35 et 36, **caractérisé en ce que** le seuil du rapport-signal-sur-interférence-et-bruit est calculé à partir du débit de bits attribué au mobile.

**38.** Dispositif selon la revendication 37, **caractérisé en ce que** les mobiles ont une demande de débit variable et **en ce qu'**il comprend un régulateur de charge, ledit régulateur étant apte à modifier la valeur de débit de bits attribuée aux mobiles si le résultat fourni par le comparateur (23) indique que l'indicateur de charge est inférieur ou égal au seuil de charge.

**Claims**

**1.** Control method for a wireless communications network, the said network being composed of stations (u) communicating with mobiles (m$_u$) via downlink,

**characterized in that** it includes for a given station:

i) for a mobile ($m_u$) served by the station (u),

i1) the calculation (102) of a first elementary quantity ($G1(u,m_u)$) taking into account the attenuation ($L_{v,mu}$) between each neighbouring station for the mobile (v) and the mobile ($m_u$), and the limit of total power emitted by each neighbouring station,

i2) the product (104) of the first elementary quantity by a second elementary quantity ($G2(u,m_u)$) taking into account the requirements, in terms of communication, of the mobile vis-à-vis the server station ($\xi_{mu}'$) and the attenuation between the server station and the mobile ($L_{u,mu}$) which gives an elementary product, and

ii) the control of the link between the said server station and one or more mobiles served by the station based on a load indicator derived from the elementary products relating to each of the mobiles.

2. Method according to Claim 1, **characterized in that** it further includes, for a predefined set of mobiles including the mobiles served by a given station (u):

a) the application (200, 202, 204) of step i) to each mobile in the set, which gives elementary products (EDPAPmu),

b) the summation (206) of the elementary products obtained in step a), and

c) the comparison (208) of a load indicator derived from the summation made in step b) with a load threshold relative to the limit of total power emitted by the server station ($P_{lim}(u)$) for the control of step ii).

3. Method according to one of Claims 1 and 2, **characterized in that** step i1) includes for a given neighbouring station for the mobile:

i01) the division of the limit of total power emitted by the said neighbouring station by the attenuation between the neighbouring station (v) and the mobile ($L_{v,mu}$), and

i02) the multiplication of the value obtained in step i01) by the orthogonality factor between the server station and the said neighbouring station.

4. Method according to Claim 3, **characterized in that** step i1) includes:

i0) the application of steps i01) and i02) to each neighbouring station,

i1) the summation of the values obtained in step

i0),

i2) the addition of external noise to the value obtained in step i1), which gives the said first elementary quantity for the said given mobile.

5. Method according to one of Claims 2 to 4, **characterized in that** step c) includes the calculation of the difference between the limit of total power emitted by the server antenna and the power of the common channels, which gives the said load threshold.

6. Method according to one of Claims 2 to 5, **characterized in that** the load indicator is equal to the result of the summation made in step b).

7. Method according to Claim 6, **characterized in that** the mobiles have a fixed rate demand, and **in that** if the comparison in step c) indicates that the load indicator is above the load threshold, it further includes:

d) the reduction in the number of mobiles in the predefined set of mobiles,

e) an iteration of steps a) to c) applied to the reduced set obtained in step d).

8. Method according to one of Claims 2 to 5, **characterized in that** the mobiles have a fixed rate demand, and **in that** the summation of the elementary products in step b) is performed step by step according to a chosen order and includes, for a given initial value:

b1) the addition of an elementary product associated with a given mobile in the predefined set to the said initial value, which gives a current sum,

b2) an iteration of step c) applied to a load indicator equal to the current sum.

9. Method according to Claim 8, **characterized in that**, if the comparison in step b2) indicates that the load indicator is below or equal to the threshold load, step b) further includes an iteration of steps b1) and b2), for the next elementary product, in the chosen order, with an initial value equal to the current sum obtained in the previous step b1).

10. Method according to Claim 9, **characterized in that**, if the comparison in step b2) indicates that the load indicator is above the load threshold, step b) further includes interrupting the summation and denying the mobile associated with the last added elementary product and the mobiles associated with the following elementary products in the chosen order the access to the server station.

11. Method according to one of Claims 8 to 10, **charac-**

**terized in that** the summation of the elementary products is performed in ascending order of the elementary products.

12. Method according to one of Claims 8 to 10, **characterized in that** the summation of the elementary products is performed in random order of the elementary products.

13. Method according to one of Claims 8 to 10, **characterized in that** the summation of the elementary products is performed in an order chosen according to predefined priorities between the associated mobiles.

14. Method according to one of Claims 8 to 13, **characterized in that** the initial value is zero at the first iteration of step b1).

15. Method according to one of Claims 2 to 5, **characterized in that** the mobiles have a fixed rate demand and **in that** it further includes a control of the access (300) to the server station by a new mobile.

16. Method according to Claim 15, **characterized in that** step (c) includes the storage of the value resulting from the summation.

17. Method according to Claim 16, **characterized in that** the access control further includes:

> j1) an iteration (301) of step i) for the new mobile, which gives an elementary product associated with the new mobile,
> j2) the addition of this elementary product to the stored value, and
> j3) an iteration (308) of step c) applied to a load indicator equal to the result of step j2).

18. Method according to Claim 17, **characterized in that** the new mobile is authorized access to the server station (310) if the comparison in step j3) indicates that the load indicator is below or equal to the load threshold.

19. Method according to Claim 17, **characterized in that** the new mobile is denied access to the server station (312) if the comparison in step j3) indicates that the load indicator is above the said load threshold.

20. Method according to one of the preceding claims, **characterized in that** step i2) includes the calculation of a quantity representing the requirements, in terms of communication, of the mobile vis-à-vis the server station ($\xi m_u{}'$) from the threshold of the signal-to-interference-and-noise ratio and the orthogonality factor between the server station channels.

21. Method according to Claim 20, **characterized in that** step i2) includes the multiplication of the quantity representing the requirements, in terms of communication, of the mobile vis-à-vis the server station ($\xi m_u{}'$) by the attenuation between the server station and the mobile ($L_{u,mu}$), which gives the second elementary quantity.

22. Method according to one of Claims 20 and 21, **characterized in that** the threshold of the signal-to-interference-and-noise ratio is calculated from the bit rate assigned to the mobile.

23. Method according to Claim 22 taken in combination with Claim 6, **characterized in that** the mobiles have a variable rate demand and **in that** step i1) initially includes:

> i'01) the calculation of the threshold of the signal-to-interference-and-noise ratio as a function of an initial bit rate value,
> i'02) the calculation of the quantity ($\xi m_u{}'$) representing the requirements, in terms of communication, of the mobile vis-à-vis the server station as a function of the threshold of the signal-to-interference-and-noise ratio obtained in step i'01),

the method further including, if the comparison of step c) indicates that the sum is greater than the load threshold, a modification of the initial bit rate value and an iteration of steps a) to c) for the new initial rate value.

24. Control device for a wireless communications network, including stations communicating with mobiles via downlink, the device comprising:

> - an elementary load calculator capable of calculating the load induced by a mobile ($m_u$) on a given station (u),

> **characterized in that** the elementary load calculator includes:

> - a first function (PA1) capable of calculating a first elementary quantity taking into account the attenuation between each neighbouring station for the mobile and the mobile ($L_{v,mu}$), and the limit of total power emitted by each neighbouring station,
> - a second function (PA2) capable of calculating a second elementary quantity taking into account the requirements, in terms of communication, of the mobile vis-à-vis the server station ($\xi_{mu}{}'$) and the attenuation between the station and the mobile ($L_{u,mu}$),

the elementary load calculator being capable of calculating the product of the first elementary quantity by the second elementary quantity (PA3), which gives an elementary product representing the load induced by the mobile ($EDPAP_{mu}$), and **in that** the device is capable of controlling the link between each station and one or more mobiles served by the station based on a load indicator derived from the elementary products relating to each of the said mobiles.

25. Device according to Claim 24, **characterized in that** it is capable of calculating the respective elementary products for a predefined set of mobiles served by a given station.

26. Device according to Claim 25, **characterized in that** it further includes a summation function ($\Sigma$) capable of summing the calculated elementary products.

27. Device according to Claim 26, **characterized in that** it further includes a comparator (23) interacting with the summation function, the comparator being capable of comparing a load indicator ($Ich(u)$), derived from the summation performed by the summation function for the server station (u), with a load threshold ($S(u)$) relative to the limit of total power emitted by the server station ($P_{lim}(u)$).

28. Device according to Claim 27, **characterized in that** it includes a threshold calculator capable of calculating the difference between the limit of total power emitted by the server station ($P_{lim}(u)$) and the power of the common channels of the server station, which gives the said load threshold ($S(u)$).

29. Device according to one of Claims 24 to 28, **characterized in that** the first function (PA1) is capable of dividing the limit of total power emitted by a given neighbouring station for the mobile by the attenuation between the neighbouring station and the mobile ($L_{v,mu}$), and of multiplying the value resulting from the division by the orthogonality factor between the server station and the said neighbouring station, which gives an intermediate quantity.

30. Device according to Claim 29, **characterized in that** the first function (PA1) is capable of calculating the value of the intermediate quantity for each neighbouring station for the mobile (v), of summing the values of the intermediate quantities thus obtained, and of adding external noise to the result of this summation, which gives the first elementary quantity for the said mobile.

31. Device according to one of Claims 27 to 30, **characterized in that** it includes a load reduction function capable of reducing the number of mobiles in the predefined set of mobiles associated with the station, if the comparator (23) indicates that the load indicator is above the load threshold.

32. Device according to one of Claims 27 to 31, **characterized in that** the mobiles have a fixed rate demand and **in that** it further includes an access controller for controlling access of a new mobile to the station depending on the result ($Rep(u)$) supplied by the comparator (23).

33. Device according to Claim 32, **characterized in that** the access controller is capable of authorizing the new mobile ($m_u$) to access to the station (u) if the result supplied by the comparator (23) indicates that the load indicator is below or equal to the load threshold.

34. Device according to Claim 32, **characterized in that** the access controller is capable of denying the new mobile access to the server station if the result supplied by the comparator indicates that the load indicator is above the load threshold.

35. Device according to one of Claims 24 to 34, **characterized in that** the second function is capable of calculating a quantity representing the requirements, in terms of communication, of the mobile vis-à-vis the server station ($\xi m_u'$) from the threshold of the signal-to-interference-and-noise ratio and the orthogonality factor between the server station channels.

36. Device according to Claim 35, **characterized in that** the second function (PA2) is capable of multiplying the quantity representing the requirements, in terms of communication, of the mobile vis-à-vis the server station ($\zeta m_u'$) by the attenuation between the station and the mobile ($L_{u,mu}$), which gives the second elementary quantity.

37. Device according to one of Claims 35 and 36, **characterized in that** the threshold of the signal-to-interference-and-noise ratio is calculated from the bit rate assigned to the mobile.

38. Device according to Claim 37, **characterized in that** the mobiles have a variable rate demand and **in that** it includes a load regulator, the said regulator being capable of modifying the bit rate value assigned to the mobiles if the result supplied by the comparator (23) indicates that the load indicator is below or equal to the threshold load.

**Patentansprüche**

1. Verfahren zur Kontrolle eines drahtlosen Kommunikationsnetzes, wobei das genannte Netz durch Stationen (u) gebildet wird, die durch die Abwärtsstrecke mit Mobilgeräten ($m_u$) kommunizieren, **dadurch gekennzeichnet, dass** es für eine bestimmte bzw. gegebene Station umfasst:

i1) die Berechnung (102) einer ersten Elementargröße ($G1(u,m_u)$), die der Dämpfung ($L_{v,mu}$) zwischen jeder Nachbarstation (v) des Mobilgeräts und dem Mobilgerät ($m_u$) und dem Grenzwert der durch jede Nachbarstation ausgesendeten Gesamtleistung Rechnung trägt,
i2) das Produkt (104) der ersten Elementargröße mal einer zweiten Elementargröße ($G2(u,m_u)$), die den kommunikationsbezogenen Erfordernissen des Mobilgeräts gegenüber der Dienststation ($\xi_{mu'}$) und der Dämpfung zwischen der Dienststation und dem Mobilgerät ($Lu,mu$) Rechnung trägt, und

ii) die Kontrolle der Verbindung zwischen der genannten Dienststation und einem oder mehreren durch die Station bedienten Mobilgeräten aufgrund eines Belastungsindikators, abgeleitet von den jedes der Mobilgeräte betreffenden Elementarprodukten.

2. Verfahren nach Anspruch 1, **dadurch gekennzeichnet, dass** es außerdem für eine vordefinierte Gruppe von Mobilgeräten, welche die durch eine gegebene Station (u) bedienten Mobilgeräte enthält, umfasst:

a) die Anwendung (200, 202, 204) des Schritts i) auf jedes Mobilgerät der Gruppe, was Elementarprodukte (EDPAPmu) liefert,
b) die Summierung (206) der in Schritt a) erhaltenen Elementarprodukte, und
c) den Vergleich (208) eines Belastungsindikators, abgeleitet von der in dem Schritt b) gemachten Summierung, mit einem Belastungsschwellenwert bezüglich des Grenzwerts ($P_{lim}(u)$) der durch die Dienststation ausgesendeten Gesamtleistung, um die Kontrolle des Schritts ii) durchzuführen.

3. Verfahren nach einem der Ansprüche 1 und 2, **dadurch gekennzeichnet, dass** der Schritt i1) für eine gegebene Nachbarstation des Mobilgeräts umfasst:

i01) die Division des Grenzwerts der durch die genannte Nachbarstation ausgesendeten Gesamtleistung durch die Dämpfung zwischen der Nachbarstation (v) und dem Mobilgerät ($L_{v,mu}$), und
i02) die Multiplikation des in dem Schritt i01) erhaltenen Werts mit dem Orthogonalitätsfaktor zwischen der Dienststation und der genannten Nachbarstation.

4. Verfahren nach Anspruch 3, **dadurch gekennzeichnet, dass** der Schritt i1) umfasst:

i0) die Anwendung der Schritte i01) und i02) auf jede Nachbarstation,
i1) die Summierung der in dem Schritt i0) erhaltenen Werte,
i2) das Hinzufügen des externen Rauschens zu dem in dem Schritt i1) erhaltenen Wert, was für das genannte gegebene Mobilgerät die erste Elementargröße liefert.

5. Verfahren nach einem der Ansprüche 2 bis 4, **dadurch gekennzeichnet, dass** der Schritt c) die Berechnung der Differenz zwischen dem Grenzwert der durch die Dienstantenne ausgesendeten Gesamtleistung und der Leistung der Gemeinschaftskanäle umfasst, was den genannten Belastungsschwellenwert liefert.

6. Verfahren nach einem der Ansprüche 2 bis 5, **dadurch gekennzeichnet, dass** der Belastungsindikator gleich dem Resultat der in Schritt b) gemachten Summierung ist.

7. Verfahren nach Anspruch 6, **dadurch gekennzeichnet, dass** die Mobilgeräte eine fixe Bitratenanforderung haben, und dadurch, dass es, wenn der Vergleich des Schritts c) ergibt, dass der Belastungsindikator größer ist als Belastungsschwellenwert, außerdem umfasst:

d) die Reduzierung der Anzahl der Mobilgeräte der vordefinierten Gruppe von Mobilgeräten,
e) eine Wiederholung der Schritte a) bis c), angewendet auf die in Schritt d) erhaltene reduzierte Gruppe.

8. Verfahren nach einem der Ansprüche 2 bis 5, **dadurch gekennzeichnet, dass** die Mobilgeräte eine fixe Bitratenanforderung haben, und dadurch, dass die Summierung der Elementarprodukte in Schritt b) Schritt für Schritt entsprechend einer gewählten Reihenfolge durchgeführt wird und für einen bestimmten Ausgangswert umfasst:

b1) das Hinzufügen eines einem bestimmten Mobilgerät der vordefinierten Gruppe zugeordneten Elementarprodukts zu dem Ausgangswert, was eine laufende Summe liefert, b2) eine Iteration des Schritts c), angewendet auf einen Belastungsindikator gleich der laufenden Summe.

9. Verfahren nach Anspruch 8, **dadurch gekennzeichnet, dass** der Schritt b) - wenn der Vergleich des Schritts b2) ergibt, dass der Belastungsindikator kleiner ist als der Belastungsschwellenwert oder gleich -, außerdem eine Wiederholung der Schritte b1) und b2) für das nächste Elementarprodukt entsprechend der gewählten Reihenfolge umfasst, mit einem Ausgangswert gleich der in dem vorhergehenden Schritt b1) erhaltenen laufenden Summe.

**10.** Verfahren nach Anspruch 9, **dadurch gekennzeichnet, dass** der Schritt b) - wenn der Vergleich des Schritts b2) ergibt, dass der Belastungsindikator größer ist als der Belastungsschwellenwert -, außerdem eine Unterbrechung der Summierung und ein Verbot für den Zugriff auf die Dienststation durch dasjenige Mobilgerät umfasst, das dem letzten hinzugefügten Elementarprodukt zugeordnet ist, und durch diejenigen Mobilgeräte, die den nachfolgenden Elementarprodukten zugeordnet sind, entsprechend der gewählten Reihenfolge.

**11.** Verfahren nach einem der Ansprüche 8 bis 10, **dadurch gekennzeichnet, dass** die Summierung der Elementarprodukte entsprechend einer aufsteigenden Reihenfolge der Elementarprodukte durchgeführt wird.

**12.** Verfahren nach einem der Ansprüche 8 bis 10, **dadurch gekennzeichnet, dass** die Summierung der Elementarprodukte entsprechend einer zufälligen Reihenfolge der Elementarprodukte durchgeführt wird.

**13.** Verfahren nach einem der Ansprüche 8 bis 10, **dadurch gekennzeichnet, dass** die Summierung der Elementarprodukte entsprechend einer Reihenfolge durchgeführt wird, die in Abhängigkeit von zwischen den zugeordneten bzw. zugehörigen Mobilgeräten vordefinierten Prioritäten erfolgt.

**14.** Verfahren nach einem der Ansprüche 8 bis 13, **dadurch gekennzeichnet, dass** der Ausgangswert bei der erste Iteration des Schritts b1) null ist.

**15.** Verfahren nach einem der Ansprüche 2 bis 5, **dadurch gekennzeichnet, dass** die Mobilgeräte eine fixe Bitratenanforderung haben, und dadurch, dass es außerdem eine Kontrolle (300) des Zugriffs eines neuen Mobilgeräts auf die Dienststation umfasst.

**16.** Verfahren nach Anspruch 15, **dadurch gekennzeichnet, dass** der Schritt c) die Abspeicherung der aus der Summierung resultierenden Werte umfasst.

**17.** Verfahren nach Anspruch 16, **dadurch gekennzeichnet, dass** die Zugriffskontrolle außerdem umfasst:

j1) eine Iteration (301) des Schritts i) für das neue Mobilgerät, die ein dem neuen Mobilgerät zugeordnetes Elementarprodukt liefert,
j2) das Hinzufügen dieses Elementarprodukts zu dem abgespeicherten Wert, und
j3) eine Iteration (308) des Schritts c), angewendet auf einen Belastungsindikator gleich dem Resultat des Schritts j2).

**18.** Verfahren nach Anspruch 17, **dadurch gekennzeichnet, dass** der Zugriff des neuen Mobilgeräts auf die Dienststation autorisiert wird (310), wenn der Vergleich des Schritts j3) ergibt, dass der Belastungsindikator kleiner ist als der Belastungsschwellenwert oder gleich.

**19.** Verfahren nach Anspruch 17, **dadurch gekennzeichnet, dass** der Zugriff des neuen Mobilgeräts auf die Dienststation verweigert wird (312), wenn der Vergleich des Schritts j3) ergibt, dass der Belastungsindikator größer ist als der genannte Schwellenwert.

**20.** Verfahren nach einem der vorangehenden Ansprüche, **dadurch gekennzeichnet, dass** der Schritt i2) die Berechnung einer Größe umfasst, welche die kommunikationsbezogenen Erfordernisse des Mobilgeräts gegenüber der Dienststation ($\xi_{mu'}$) aufgrund des Signal-zu-Interferenz-und-Geräusch-Abstands und des Orthogonalitätsfaktors zwischen den Kanälen der Dienststation darstellt.

**21.** Verfahren nach Anspruch 20, **dadurch gekennzeichnet, dass** der Schritt i2) die Multiplikation der die Erfordernisse des Mobilgeräts gegenüber der Dienststation ($\xi_{mu'}$) darstellenden Größe mit der Dämpfung zwischen der Dienststation und dem Mobilgerät ($L_{u,mu}$) umfasst, was die zweite Elementargröße liefert.

**22.** Verfahren nach einem der Ansprüche 20 und 21, **dadurch gekennzeichnet, dass** der Schwellenwert des Signal-zu-Interferenz-und-Geräusch-Abstands aufgrund der dem Mobilgerät zugeteilten Bitrate berechnet wird.

**23.** Verfahren nach Anspruch 22 kombiniert mit Anspruch 6, **dadurch gekennzeichnet, dass** die Mobilgeräte eine variable Bitratenanforderung haben, und dadurch, dass der Schritt i1) im Voraus umfasst:

i'01) die Berechnung des Signal-zu-Interferenz-und-Geräusch-Abstands in Abhängigkeit von einem Bitraten-Ausgangswert,
i'02) die Berechnung der die kommunikationsbezogenen Erfordernisse des Mobilgeräts gegenüber der Dienststation darstellenden Größe ($\xi_{mu'}$) in Abhängigkeit von dem in Schritt i'01) erhaltenen Signal-zu-Interferenz-und-Geräusch-Abstand,

wobei das Verfahren - wenn der Vergleich des Schritts c) ergibt, dass die Summe größer ist als der Belastungsschwellenwert -, außerdem eine Modifikation des Bitraten-Ausgangswerts und eine Iteration der Schritte a) bis c) für den neuen Bitraten-Ausgangswert umfasst.

24. Kontrollvorrichtung für drahtlose Kommunikationsnetze, Stationen enthaltend, die über Abwärtsstrekken mit Mobilgeräten kommunizieren, umfassend:

- eine Elementarbelastungs-Berechnungseinrichtung, fähig die durch ein Mobilgerät ($m_u$) in einer bestimmten Station (u) induzierte Belastung zu berechnen,

**dadurch gekennzeichnet, dass** die Berechnungseinrichtung umfasst:

- eine erste Funktion (PA1), fähig eine erste Elementargröße zu berechnen, die einer Dämpfung zwischen jeder Nachbarstation des Mobilgeräts und dem Mobilgerät ($L_{u,mu}$) und dem Grenzwert der durch jede Nachbarstation ausgesendeten Gesamtleistung Rechnung trägt,
- eine zweite Funktion (PA2), fähig eine zweite Elementargröße zu berechnen, die den kommunikationsbezogenen Erfordernissen des Mobilgeräts gegenüber der Dienststation ($\xi_{mu'}$) und der Dämpfung zwischen der Dienststation und dem Mobilgerät ($L_{u,mu}$) Rechnung trägt,

wobei die Elementarbelastungs-Berechnungseinrichtung fähig ist, das Produkt (PA3) aus erster Elementargröße mal zweiter Elementargröße zu berechnen, was ein Elementarprodukt liefert, das die durch das Mobilgerät ($EDPAP_{mu}$) induzierte Belastung darstellt, und dadurch, dass die Vorrichtung fähig ist, aufgrund eines Belastungsindikators, abgeleitet von jedes der genannten Mobilgeräte betreffenden Elementarprodukten, die Verbindung zwischen jeder Station und einem oder mehreren Mobilgeräten zu kontrollieren, die durch die Station bedient werden.

25. Vorrichtung nach Anspruch 24, **dadurch gekennzeichnet, dass** sie fähig ist, die jeweiligen Elementarprodukte für eine vordefinierte Gruppe von Mobilgeräten zu berechnen, die durch eine bestimmte Station bedient werden.

26. Vorrichtung nach Anspruch 25, **dadurch gekennzeichnet, dass** sie außerdem eine Summierfunktion ($\Sigma$) umfasst, fähig die berechneten Elementarprodukte zu summieren.

27. Vorrichtung nach Anspruch 26, **dadurch gekennzeichnet, dass** sie außerdem einen mit der Summierfunktion interagierenden Komparator (23) umfasst, der fähig ist, einen Belastungsindikator (Ich (u)) zu berechnen, abgeleitet von durch die Summierfunktion für die Dienststation (u) gemachten Summierung, mit einem Belastungsschwellenwert ($S(u)$) bezüglich des Grenzwerts ($P_{lim}(u)$) der durch die Dienststation ausgesendeten Gesamtleistung.

28. Vorrichtung nach Anspruch 27, **dadurch gekennzeichnet, dass** sie eine Schwellenwert-Berechnungseinrichtung umfasst, fähig die Differenz zwischen dem Grenzwert ($P_{lim}(u)$) der durch die Dienststation ausgesendeten Gesamtleistung und der Leistung der Gemeinschaftskanäle der Dienststation zu berechnen, was den genannten Belastungsschwellenwert ($S(u)$) liefert.

29. Vorrichtung nach einem der Ansprüche 24 bis 28, **dadurch gekennzeichnet, dass** die erste Funktion (PA1) fähig ist zur Division des Grenzwerts der durch eine gegebene Nachbarstation für das Mobilgerät ausgesendeten Gesamtleistung durch die Dämpfung zwischen der Nachbarstation und dem Mobilgerät ($L_{v,mu}$) und
zur Multiplikation des aus der Division resultierenden Werts mit dem Orthogonalitätsfaktor zwischen der Dienststation und der genannten Nachbarstation, was eine Zwischengröße liefert.

30. Vorrichtung nach Anspruch 29, **dadurch gekennzeichnet, dass** die erste Funktion (PA1) fähig ist, den Wert der Zwischengröße für jede Nachbarstation des Mobilgeräts (v) zu berechnen, die Werte der so erhaltenen Zwischengrößen zu summieren und das externe Rauschen dem Resultat dieser Summierung hinzuzufügen, was die erste Elementargröße für das genannte Elementargerät liefert.

31. Vorrichtung nach einem der Ansprüche 27 bis 30, **dadurch gekennzeichnet, dass** sie eine Belastungsreduzierungsfunktion umfasst, fähig die Anzahl der Mobilgeräte der vordefinierten Gruppe der Station zugeordneter Mobilgeräte zu reduzieren, wenn der Komparator (23) angibt, dass der Belastungsindikator größer ist als der Belastungsschwellenwert.

32. Vorrichtung nach einem der Ansprüche 27 bis 31, **dadurch gekennzeichnet, dass** die Mobilgeräte eine fixe Bitratenanforderung haben, und dadurch, dass sie außerdem eine Zugriffskontrolleinrichtung umfassen, um den Zugriff eines neuen Mobilgeräts auf die Station zu kontrollieren, in Abhängigkeit von dem durch den Komparator (23) gelieferten Resultat ($Rep(u)$).

**33.** Vorrichtung nach Anspruch 32, **dadurch gekennzeichnet, dass** die Zugriffskontrolleinrichtung fähig ist, den Zugriff eines neuen Mobilgeräts ($m_u$) auf die Station (u) zu autorisieren, wenn das durch den Komparator (23) gelieferte Resultat angibt, dass der Belastungsindikator kleiner ist als der Belastungsschwellenwert oder gleich.

**34.** Vorrichtung nach Anspruch 32, **dadurch gekennzeichnet, dass** die Zugriffskontrolleinrichtung fähig ist, den Zugriff eines neuen Mobilgeräts auf die Dienststation zu verbieten, wenn das durch den Komparator gelieferte Resultat angibt, dass der Belastungsindikator größer ist als der Belastungsschwellenwert.

**35.** Vorrichtung nach einem der Ansprüche 24 bis 34, **dadurch gekennzeichnet, dass** die zweite Funktion fähig ist, eine die kommunikationsbezogenen Erfordernisse des Mobilgeräts gegenüber der Dienststation ($\xi_{mu'}$) darstellende Größe aufgrund des Signal-zu-Interferenz-und-Geräusch-Abstands und des Orthogonalitätsfaktors zwischen den Kanälen der Dienststation zu berechnen.

**36.** Vorrichtung nach Anspruch 35, **dadurch gekennzeichnet, dass** die zweite Funktion (PA2) fähig ist, die Größe, die die kommunikationsbezogenen Erfordernisse des Mobilgeräts gegenüber der Dienststation ($\xi_{mu'}$) darstellt, mit der Dämpfung zwischen der Station und dem Mobilgerät ($L_{u,mu}$) zu multiplizieren, was die zweite Elementargröße liefert.

**37.** Vorrichtung nach einem der Ansprüche 35 und 36, **dadurch gekennzeichnet, dass** der Schwellenwert des Signal-zu-Interferenz-und-Geräusch-Abstands aufgrund der dem Mobilgerät zugeteilten Bitrate berechnet wird.

**38.** Vorrichtung nach Anspruch 37, **dadurch gekennzeichnet, dass** die Mobilgeräte eine variable Bitratenanforderung haben, und dadurch, dass sie einen Belastungsregulator umfasst, fähig den den Mobilgeräten zugeteilten Bitratenwert zu modifizieren, wenn das durch den Komparator (23) gelieferte Resultat angibt, dass der Belastungsindikator kleiner ist als der Belastungsschwellenwert oder gleich.

FIG.1a

FIG.1b

FIG.1c

EP 1 473 954 B1

```
                              ┌10
                    ┌─────────────────────────────────┐
        ┌───────────┤  Pour chaque antenne indépendamment  ├──────────┐
        │           └──────────────┬──────────────────┘          │
        │                          ┊                             │
   ┌10.1│              ┌10.2        ┊                    ┌10.N    │
   ┌────▼──────────┐  ┌────▼──────────┐          ┌────▼──────────┐
   │Appliquer le critère de│ │Appliquer le critère de│         │Appliquer le critère de│
   │faisabilité d'allocation│ │faisabilité d'allocation│ ┄┄┄┄┄┄ │faisabilité d'allocation│
   │de puissance   │  │de puissance   │          │de puissance   │
   └───────┬───────┘  └───────┬───────┘          └───────┬───────┘
           │                  │                          │
           └──────────────────┼──────────────────────────┘
                              │
                          ┌11 │
              oui    ┌─────▼─────────────┐    non
        ┌────────────┤  Chaque antenne satisfait  ├────────────┐
        │            │      le critère ?          │            │
        │            └───────────────────────────┘            │
        ▼                                                      ▼
  ┌──────────────┐                                    ┌──────────────┐
  │L'allocation de │                                    │L'allocation de │
  │puissance certainement│                              │puissance peut être│
  │faisable      │                                    │infaisable     │
  └──────────────┘                                    └──────────────┘
```

FIG.1d

FIG.2a

FIG.2b

FIG.2c

Calcul de la charge $EDPAP_{mu}$ induite par un mobile mu sur une station serveuse u ⟋100

103⟋ Calcul de la deuxième grandeur élémentaire $G2(u,m_u)$ en fonction de l'atténuation $L_{u,mu}$ vis à vis de la station u et des besoins $\xi'_{mu}$.

102⟋ Calcul de la première grandeur élémentaire $G1(m_u)$ en fonction de l'atténuation $L_{v,mu}$ et de la limite de puissance $P_{lim}(v)$ pour chaque station voisine v

Multiplier $G1(u,m_u)$ par $G2(u,m_u)$, ce qui fournit un produit élémentaire représentant la charge $EDPAP_{mu}$ ⟋104

FIG.2d

Application du critère de
faisabilité d'allocation de
puissance pour la station u

Pour chaque mobile mu
de l'ensemble prédéfini
de mobiles — 200

Calcul le produit élémentaire
202 — EDPAP$_{mu}$ associé à mu

204 — Autre mobile
mu ? — Y

N

206 — Sommer les produits élémentaires
calculés pour tous les mobiles mu
servis par la station u :
SOM(u) = $\Sigma$ EDPAP$_{mu}$

TROP DE
TRAFIC DANS
LA STATION u

N — SOM(u) ≤ P$_{lim}$(u) − P'(u) ? — 208

O

TRAFIC
ACCEPTABLE

FIN

FIG. 3

```
        ┌─────────────────────────┐
        │  Contrôle d'admission d'un │ ─300
        │  mobile arrivant m à une station u │
        └─────────────────────────┘
                     │
        ┌────────────┤
        │            ▼
        │      ╱───────────────╲
        │     ╱  Pour chaque    ╲ ─302
        │     ╲  mobile mu servi ╱
        │      ╲  par la station u╱
        │       ╲───────────────╱
        │            │
        │            ▼  ◄──────────────┐
  301   │      ┌─────────────────┐     │
┌───────────┐  │ 303─ Calcul le produit│  │
│ Calcul le produit│  │ élémentaire EDPAPmu│  │
│ élémentaire EDPAPm│  │ associé à mu    │  │
│ associé au mobile m│  └─────────────────┘  │
└───────────┘           │             │
        │               ▼             │
        │         ╱───────────╲       │
        │    304─ ╱ Autre mobile ╲──Y──┘
        │         ╲    mu ?      ╱
        │          ╲───────────╱
        │               │ N
        │               ▼
        │      ┌──────────────────────────┐
        │ 306─ │ Sommer les produits élémentaires│
        │      │ calculés pour tous les mobiles mu│
        │      │ servis par la station u :       │
        │      │ SOM(u) = Σ EDPAPmu             │
        │      └──────────────────────────┘
        │               │
  312   │               ▼
┌──────────┐      ╱──────────────────────────╲ ─308
│Accès REFUSE│◄─N─╱ SOM(u)+EDPAPm ≤ Plim(u)-P'(u)? ╲
│du mobile m à│    ╲──────────────────────────╱
│la station u│               │ O
└──────────┘                ▼
               ┌──────────────────┐
               │ Accès AUTORISE du │ ─310
               │ mobile m à la station u│
               └──────────────────┘
                        │
                        ▼
                    ╭───────╮
                    │  FIN  │      FIG.4
                    ╰───────╯
```

Contrôle de congestion
pour une station u donnée

Pour chaque
mobile mu servi
par la station u /—500

Calcul le rapport SNIR $\xi_{mu}$ en fonction
d'une valeur de départ de débit binaire $D_{bit}$, et
du rapport énergie par bit.sur-bruit $Eb/No$ /—502

Calcul le rapport SNIR modifié $\xi'_{mu}$
en fonction de $\xi_{mu}$ /—504

Calcul le produit élémentaire $EDPAP_{mu}$
associé à mu /—506

Autre mobile
mu ? /—508

Y

N

Sommer les produits élémentaires calculés
pour tous les mobiles mu servis par la
station u : $SOM(u) = \Sigma\ EDPAP_{mu}$ /—510

$D_{bit} = D_{bit}'$ /—516

Calculer une
nouvelle valeur du
débit binaire des
mobiles $D_{bit}'$ /—514

N

$SOM(u) \leq P_{lim}(\ \overline{\ }\ ) - P'(u)$? /—512

O

FIN

## FIG.5